# EUROPEAN PATENT APPLICATION

(11) **EP 4 686 235 A1**
(43) Date of publication of application: **28.01.2026**
(21) Application number: 24190802.9
(22) Date of filing: 25.07.2024
(51) Int. Cl.: H04W 4/70, H04L 7/00

(54) **INTERNET OF THINGS DEVICE AND NODE**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP); KANG, Yang, 469332 Singapore (SG)
(74) Representative: Grünecker Patent- und Rechtsanwälte PartG mbB

(57) **Abstract**

The present disclosure relates to an Internet of Things, loT, device comprising the following. A transceiver of the loT device receives a configuration signal. A circuitry of the loT device determines a control transmission parameter and a data transmission parameter based on a signal characteristic of the received configuration signal. The transceiver uses the determined control transmission parameter and the determined data transmission parameter to receive or transmit respectively a control information transmission and a data information transmission.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates providing an loT device to perform an improved loT transmission procedure.

In an embodiment, the techniques disclosed here feature an Internet of Things, loT, device comprising the following. A transceiver of the loT device receives a configuration signal. A circuitry of the loT device determines a control transmission parameter and a data transmission parameter based on a signal characteristic of the received configuration signal. The transceiver uses the determined control transmission parameter and the determined data transmission parameter to receive or transmit respectively a control information transmission and a data information transmission.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: illustrates a first topology of an loT communication between a base station and an loT device,
- **Fig. 3**: illustrates a second topology of an loT communication between a base station and an loT device, with an intermediate node,
- **Fig. 4**: illustrates an exemplary implementation of a D2R transmission in the first topology of Fig. 2,
- **Fig. 5**: illustrates an exemplary implementation of a D2R transmission in the second topology of Fig. 3,
- **Fig. 6**: illustrates an exemplary implementation of D2R and R2D transmissions in the second topology of Fig. 3,
- **Fig. 7**: is a transmission diagram illustrating the OOK scheme in an loT transmission, including a carrier wave signal and data,
- **Fig. 8**: illustrates an exemplary transmission of control information and data information, preceded by a preamble transmission,
- **Fig. 9**: illustrates the transmission of the control information and data information of Fig. 8, with different chip durations,
- **Fig. 10**: illustrates an exemplary and simplified structure of an loT device and a reader,
- **Fig. 11**: illustrates a simplified and exemplary loT device structure according to a basic implementation of the improved loT transmission procedure of a solution,
- **Fig. 12**: is a sequence diagram for an exemplary loT device behaviour in line with the loT device of Fig. 11,
- **Fig. 13**: illustrates a simplified and exemplary node structure according to an exemplary implementation of the improved loT transmission procedure of a solution,
- **Fig. 14**: is a sequence diagram for an exemplary node in line with the node of Fig. 13,
- **Fig. 15**: is a signaling diagram of an exemplary and simplified implementation of the improved loT transmission procedure,
- **Fig. 16 to 21**: are exemplary illustrations for different implementations of the First Variant,
- **Fig. 22 and 23**: are exemplary illustrations for different implementations of the Second Variant,
- **Fig. 24**: is an exemplary illustration for an implementation of the Third Variant,
- **Fig. 25 and 26**: are exemplary illustrations for different implementations of the Fourth Variant, and
- **Fig. 27**: is an exemplary illustration for an implementation of the Fifth Variant.

### DETAILED DESCRIPTION

### 5G NR system architecture and protocol stacks

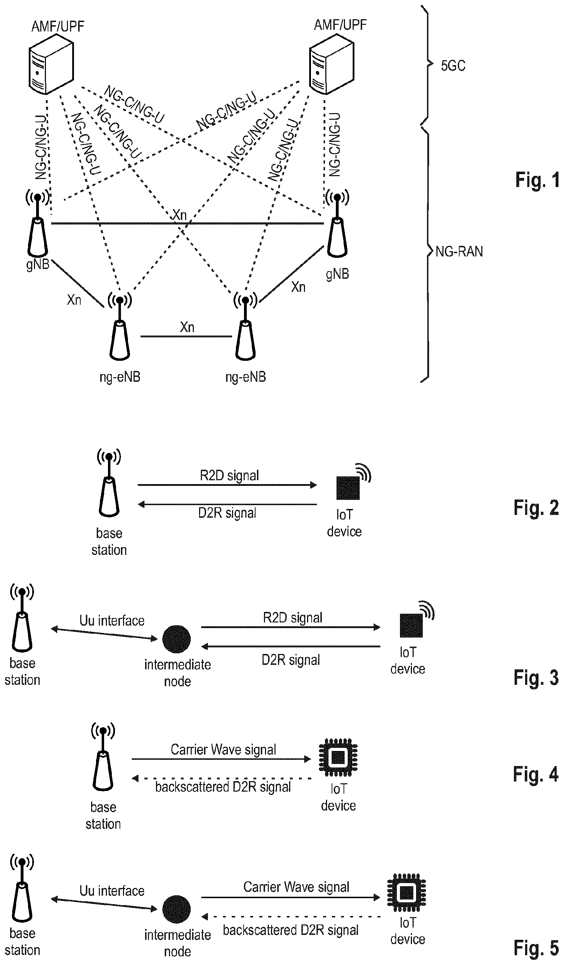

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v18.1.0, section 4).

### RRC connection setup and reconfiguration procedures

Interactions between a UE, gNB, and AMF (a 5GC entity) in the context of a transition of the UE from RRC_IDLE to RRC_CONNECTED for the NAS part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

**FIG. 2** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full Duplex operation may be applied to an operation in which the terminal is capable of performing sidelink transmission/reception simultaneously. Further, the Full Duplex operation may be applied to an operation in which the terminal is capable of performing sidelink transmission/reception and uplink or downlink transmission/reception simultaneously.

### Split gNB architecture

In the 3GPP standard, a gNB can be split into a gNB-CU (Central Unit) and one or more gNB-DUs (Distributed Units). This is illustrated in Fig. 3.

The gNB-CU is a logical node that provides support for the higher layers of the protocol stack such as SOAP, PDCP and RRC. On the other hand, the gNB-DU is a logical node that provides support for the lower layers of the protocol stack such as RLC, MAC and Physical layer. Also, note that SDAP layer will not be present if the CU is connected to a 4G Core network as the 5G core network would be available to support SOAP. Therefore, the PHY and MAC layers are terminated at the gNB-DU, while Layer 3 (RRC) is terminated at the gNB-CU.

In one example, there is a single CU for each gNB, i.e. one gNB-DU is connected to only one gNB-CU; alternatively, for resiliency, a gNB-DU may be connected to multiple gNB-CUs. One gNB-CU may control multiple gNB-DUs; for example more than 100 gNB-DUs can be connected to one gNB-CU. Each gNB-DU is able to support one or more cells, so one gNB can control hundreds of cells unlike the 4G BTS. One cell is supported by only one gNB-DU.

Also, note that the interface between CU and DU is named F1, and as per 3GPP, it should be an open interface. For NG-RAN, the NG and Xn-C interfaces for a gNB consisting of a gNB-CU and gNB-DUs, terminate in the gNB-CU. For EN-DC, the S1-U and X2-C interfaces for a gNB consisting of a gNB-CU and gNB-DUs, terminate in the gNB-CU. The gNB-CU and connected gNB-DUs are only visible to other gNBs and the 5GC as a gNB.

The gNB-CU/DU architecture is specified in more detail e.g. in 3GPP TS 38.401 v18.1.0, e.g. section 6.1. The F1 interface is specified in more detail e.g. in 3GPP TS 38.473 v18.1.0.

### Ambient IoT Devices

An ambient Internet of Things device (A-loT device) is a new type of device, introduced to be supported by 5G NR or possible later generation (e.g. 6G) technology. A-loT devices can be understood as loT devices that have the ability to harvest energy from natural or ambient sources, such as vibration, light, heat or a carrier wave (CW), e.g. provided by the base station, or the intermediate node, or a separate CW node. The energy harvesting technology can be crucial for the loT market to reduce the device operation costs. The power consumption and complexity of A-loT devices can be less compared to existing 3GPP technologies, such as MTC (machine type communication), NB-loT (NarrowBand loT), or RedCap (Reduced Capability). For instance, an ambient loT device can be operated with a small battery or without a battery and further may not require battery replenishment. Another term is "zero energy device", due to their capability to operate without a dedicated battery source. An A-loT device may be an ultra-low-complexity device with ultra-low power consumption for very-low end loT applications. Examples for A-loT devices include - without any limitation - wearables, smart home devices, automotive devices, sensors, smart keys, healthcare devices, etc.

A-loT devices may lack RRC states, such that new specifically designed operation states may have to be defined and configured for A-loT devices. ARQ (Automatic Repeat Request) and Hybrid ARQ transmission protocols that ensure reliable data delivery may not be supported by A-loT devices. A-loT devices have limited power available, resulting in reduced time periods of communication capability. Further, full device registration with the network might be difficult for loT devices, although a simplified registration or identification might be necessary.

The above characteristics of an A-loT device facilitates the wide deployment of the devices for various applications. The integration of A-loT devices into 5G and future technologies poses a demanding problem that is addressed in the present disclosure.

Importantly, it is noted that the present disclosure is not limited to A-loT devices, but may also be applicable to any other loT devices (e.g. other types, such as Critical loT, Massive loT, Broadband loT, Narrow-Band loT etc.) or even more generally to other devices that benefit from the improvements of the present disclosure. For example, the terms loT device and A-loT device are used interchangeably in this disclosure; alternatively, the terms low-power-consumption device or low-complexity transceiver device could be used instead as well.

### Topologies

Two different topologies are exemplarily considered in this disclosure for the loT communication between the loT device and the network. However, the present disclosure applies to other topologies as well. In the following, a node communicating with an loT device, for example, receiving data from or transmitting data to the loT device, may be also referred to as a reader. The reader can be e.g. a base station, or a UE etc.

In a first topology as illustrated in **Fig. 2****,** an loT device directly and bidirectionally communicates with a reader (such as a base station) over a wireless channel. The communication may include transmitting and/or receiving signals that may carry data information or control information. The data information may include e.g. user data, such as measurements performed by the loT device. The control information can be signaling information or signals such as control signals, reference signals or the like. In a further variant, not explicitly illustrated in Fig. 2, the direct communication with the base station may further include communication via one or more distributed units, DU, of the base station. A base station may operate one or more cells.

In a second topology as illustrated in **Fig. 3****,** an loT device bidirectionally communicates with an intermediate node that is located between the loT device and the reader (again e.g. a base station). The intermediate node could be for instance a User Equipment, an Integrated Access and Backhaul (IAB) node, a relay, a Network-Controlled Repeater (NCR) or any other suitable entity that supports loT. The intermediate node is connected to both the base station and the loT device and transfers the communication between the loT device and the base station. The base station may communicate with the intermediate node via a first interface, exemplified in Fig. 3 as the Uu interface (e.g. corresponds to UE - gNB interface in 5G NR). The intermediate node may communicate with the loT device via a second interface. The present disclosure is not limited to any specific interface definition. In general, the first and second interfaces in Fig. 3 may e.g. be both wireless interfaces.

**Fig. 4** illustrates an exemplary implementation of a D2R transmission in the first topology of Fig. 2, where the base station functions as the reader and generates the Carrier Wave, CW, signal for the loT device. The base station transmits the CW signal to the loT device, and the loT device may backscatter and modulate the CW signal to generate the backscattered signal as the D2R signal.

Correspondingly, **Fig. 5** illustrates an exemplary implementation of a D2R transmission in the second topology of Fig. 3, where the intermediate node (e.g. a UE) functions as a reader and generates the CW signal for the loT device. The intermediate node transmits the CW signal to the loT device, and the loT device may backscatter and modulate the CW signal to generate the backscattered signal as the D2R signal.

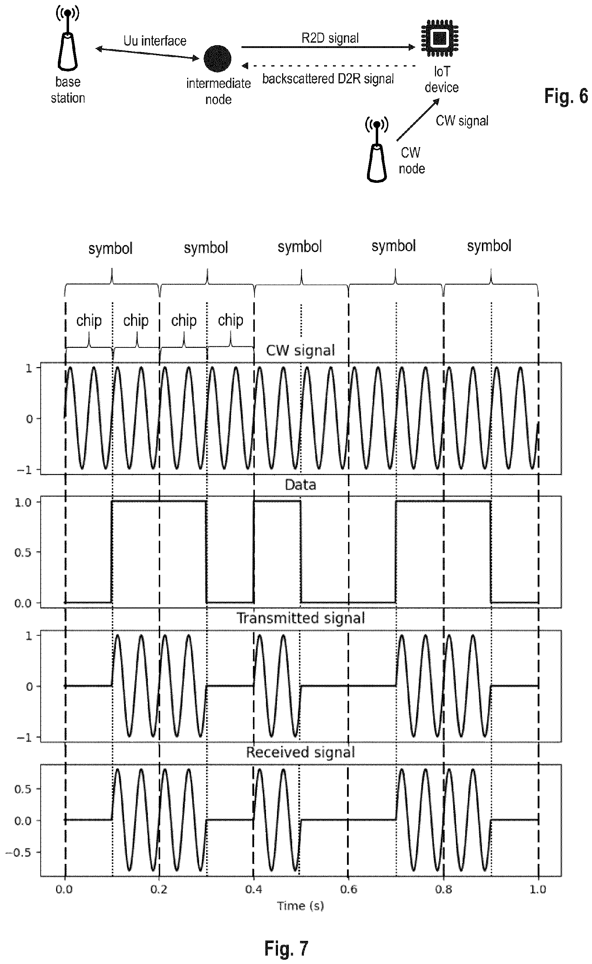

**Figs. 6** illustrates an exemplary implementation of D2R and R2D transmissions in the second topology of Fig. 3, where an intermediate node (e.g. a UE) functions as a reader. To generate the R2D signal, the intermediate node generates the carrier wave signal, which is then modulated by the intermediate node to generate the R2D signal. The CW signal is generated by a CW node, which is arranged separately from the intermediate node, and is transmitted to the loT device. The loT device backscatters the CW signal to generate the backscattered signal as the D2R signal, which is transmitted to the UE.

### Transmission and reception

Communication by loT devices covers both active transmission as well as passive backscattering. In particular, backscattering devices do not necessarily have an active transmission component but are able to modulate information on the signal (e.g. carrier wave mentioned above) received from another node (e.g. CW node, such as a UE, a WiFi node, or access point). Active transmission allows higher range and better quality of service (QoS), compared to backscattering devices.

Energy-efficient communication is one key aspect for Ambient loT devices. In said respect, an On-Off-Keying (OOK) line coding scheme can be used as a modulation technique for loT communication in 3GPP 5G and future (e.g. 6G) communication systems, due to its simplicity and energy efficiency.

The OOK technique can be used in both the first topology and the second topology illustrated respectively in Fig. 2 and 3. For instance, signals can be transmitted from a node (e.g. base station in Fig. 2 or intermediate node in Fig. 3) to the A-loT device, or vice versa, by modulating a "CW signal" according to the OOK scheme. The OOK scheme is exemplary illustrated in the schematic transmission diagram shown in **Fig. 7****.**

Fig. 7 illustrates at the top row the carrier wave signal, to be modulated further. Digital information (see second row from the top in Fig. 7) can be represented based on the presence or absence of the carrier wave. In the illustrated example, for transmitting a bit 1, the transmitting device first transmits the carrier wave signal for one chip duration (i.e. the carrier wave signal is present for one chip duration) and subsequently does not transmit a signal for one chip duration (i.e. the carrier wave signal is absent for one chip duration). For transmitting a bit 0, the transmitting device first does not transmit a signal for one chip duration (i.e. the carrier wave signal is absent for one chip duration) and subsequently transmits the carrier wave signal for one chip duration (i.e. the carrier wave signal is present for one chip duration) (see third row in Fig. 7). Based on the above, in the example of Fig. 7, the bits 0 1 1 0 1 are transmitted.

Correspondingly, the receiving device detects the transmitted information based on the presence or absence of the received signal, e.g. by using an envelope detection technique. In particular, in the illustrated example, the receiving device interprets the reception of the carrier wave for the duration of one chip and the subsequent absence of the carrier wave signal for the duration of one chip as a bit 1, while the receiving device interprets the absence of the carrier wave for the duration of one chip and the subsequent absence of the carrier wave signal for the duration of one chip as a bit 1 (see fourth row from the top in Fig. 7).

Hereby, a "chip" (indicated by dashed and dotted lines in Fig. 7) signifies the basic building block for transmitting information. In order to enhance the robustness of the transmission, bits are usually transmitted in form of "symbols" (indicated by dashed lines in Fig. 7), which may include more than one chip. In the illustrated example, a symbol comprises two chips, and an information bit 0 is transmitted by transmitting the chip sequence or "physical bit sequence" "01", and an information bit of 1 is transmitted by transmitting the chip sequence or "physical bit sequence" "10". In other words, while the duration of a chip corresponds to a basic time interval for modulating a physical bit on the carrier wave signal (i.e. presence or absence of the carrier wave), the duration of a symbol corresponds to a basic unit for modulating an information bit on the carrier wave signal, and the duration of a symbol depends on the number of chips used for transmitting one information bit. Accordingly, the duration of a symbol is equal to (when a symbol includes exactly one chip) or larger (when a symbol includes more than one chip) than the duration of the chip.

It should be noted that, while in the following aspects of the disclosure, an OOK modulation scheme is used as exemplary modulation scheme. Alternatively, also other amplitude modulation schemes (such as Frequency Shift Keying, FSK or Phase Shift Keying, PSK) may be used, which represent digital information by transmitting a carrier wave at different power levels for a defined time interval.

For transmitting information from a reader (or node) to an loT device, which can be termed as a downlink (DL) transmission, or R2D (Reader to Device) transmission or device terminated (DT) transmission, the reader generates the carrier wave signal and modulates the carrier wave signal to transmit the information, using the OOK scheme as exemplified above.

For transmitting information from an loT device to a reader (or node), which can be termed as uplink (UL) transmission, or D2R (Device to Reader) transmission or Device originated (DO) transmission, the loT device generates the signal and modulates the carrier wave signal to transmit the information, using the OOK scheme as exemplified above.

In one example, in order to reduce the power consumption and complexity of an loT device, the loT device may not comprise circuitry for generating the carrier wave signal, but instead the loT device receives a carrier wave signal from a carrier wave node and generates a backscattering signal (i.e. backscatters the received carrier wave signal).

One exemplary implementation of a transmission between an loT device and a receiver (e.g. R2D, or D2R) may include a preamble, control information and data information. The preamble may indicate the beginning of the transmission (e.g., using a delimiter) and may further be used for indicating one or more of a chip duration or transmission rate. The delimiter would be a known or predefined sequence that facilitates the receiver to determine the beginning of the transmission. In one example implementation, the delimiter consists of a long ON-duration followed by a short On-duration; for instance, the short ON-duration has the same time duration as the chip duration of the line coding for transmitting control and data information.

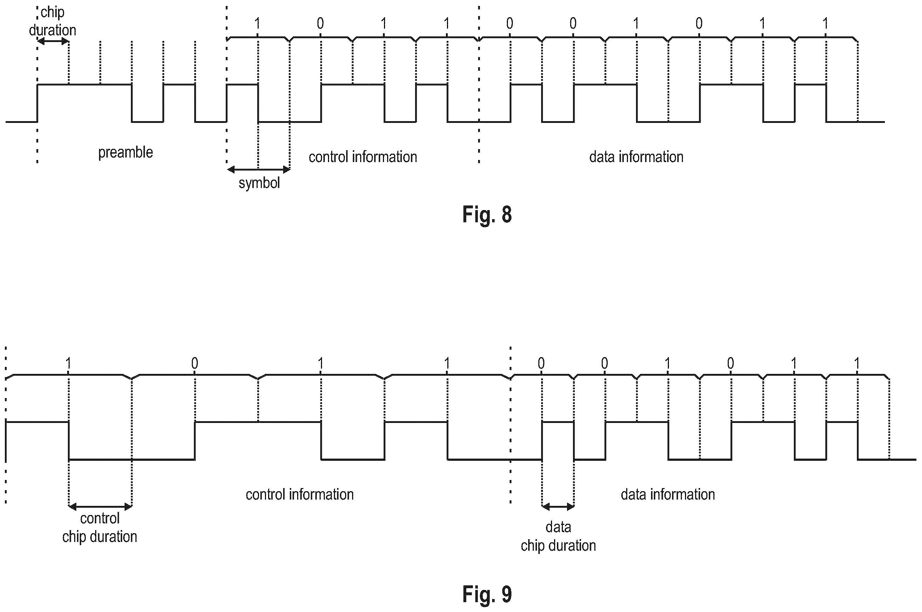

**Fig. 8** illustrates an exemplary transmission of control information and data information, preceded by a preamble transmission, as mentioned above. As apparent from Fig. 8, the preamble includes a long ON-duration (with a time duration being 3 times the chip duration) followed by a short ON-duration (with a time duration equal to the chip duration). The receiver, knowing this delimiter sequence, is able to determine the beginning of the transmission as well as the chip duration to be used for subsequently receiving the control information and data information.

It is further exemplarily assumed that one bit of the control information and data information is transmitted by using two subsequent chips (termed e.g. as a symbol), as already exemplified above in connection with Fig. 7. Correspondingly, the transmitted bits would be 1, 0, 1, 1 for the control information, and would be 0, 0, 1, 0, 1, 1 for the data information.

In one optional and exemplary implementation, the length of the control information transmission could be fixed or already known to the receiving side (e.g. predefined) or could be indicated within the control information itself. In any case, the receiving side is able to determine when the control information ends. The receiving side is also able to determine when the data information transmission starts, e.g. right after the control information transmission.

In one optional and exemplary implementation (not illustrated in Fig. 8), the end of the transmission could be indicated by a postamble (e.g. again a known or predefined sequence).

### Further improvements

As apparent from Fig. 8, the control information and data information are transmitted in the same manner. For instance, the same chip duration is used for transmitting the control and data information. Similarly, for instance, the same symbol duration is used for transmitting the control and data information, which results in a same bit transmission rate for control and data.

Furthermore, even if not illustrated in Fig. 8, the same coding rate is assumed to be used for transmitting the control and data information. As one example, it is assumed that a coding scheme can be used e.g. for error detection and correction, in which a number of input bits is coded into a larger number of output bits. The coding rate can be defined as the ratio between the input bits to the output bits. For instance, no coding corresponds to a coding rate of 1 according to which 1 output bit would be output for 1 input bit; a coding rate of ½ would result in 2 output bits per 1 input bit, a coding rate of % would result in 4 output bits per 3 input bits, etc.

Still further, even it not illustrated in Fig. 8, the same repetition scheme is assumed to be used for transmitting the control and data information. In more detail, in order to improve reliability, it is possible to repeat the transmission of particular information. The number of repetitions (e.g. no repetition, or >1 repetitions) could be the same for the control and data information transmission.

It is possible to improve the transmission of the control information and data transmission by respectively allowing different transmission parameters, such as using a different chip duration, a different bit transmission rate, a different coding rate or a different number of repetitions for the control and data information transmissions. Different transmission parameters facilitate achieving different levels of reliability of the transmission. For instance, the control information could be carried with a higher reliability compared to the data transmission, or vice versa, by using a longer chip duration and/or a lower transmission rate and/or a lower coding rate and/or a higher number of repetitions (respectively compared to the transmission parameter of the data information transmission).

**Fig. 9** illustrates the transmission of the control information and data information of Fig. 8, however, where the control information uses a longer chip duration (here e.g. double the chip duration) of the data information.

To said end, there is a need to indicate different transmission parameters for the control and data information transmission, respectively for the case that the loT device receives the control and data information transmission (R2D) and for the case that the loT device transmits the control and data information transmission (D2R).

The inventors thus have identified the possibility to define an improved loT transmission procedure and parts thereof, which facilitate meeting the above needs and avoiding one or more of the above described disadvantages. The present invention relates to different solutions and variants for such an improved loT transmission procedure.

### Solutions

In the following solutions, loT devices, nodes, integrated circuits and respective methods are provided for the improved loT transmission procedure to facilitate meeting the above needs. The present disclosure addresses the integration of loT devices into communication networks, particularly, according to 5G communication systems or future (e.g. 6G) communication systems. In particular, while 3GPP is currently developing Rel. 18 and 19 of the 5G (-Advanced) mobile communication system, 3GPP has already started planning for the next generation, 6G, of communications systems.

Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to terminology used in the current 3GPP 5G standardization (possibly also used before in LTE/LTE-A systems), even though specific terminology to be used in the context of the new radio access technology for the next communication systems (e.g. 6G) may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be a gNB in a Non-Terrestrial Network (NTN) NR system.

Communication between the UE and the base station is typically standardized and may be defined by different layers, such as PHY, MAC, RRC etc. (see above background discussion).

The term "**IoT device"** covers any loT devices (such as Ambient loT, Critical loT, Massive loT, etc.) but also other devices with possibly power or processing limitations. Correspondingly, the present disclosure is not limited to A-loT devices mentioned above, but may also be applicable to any other loT devices (e.g. other types, such as Critical loT, Massive loT, Broadband loT, Narrow-Band loT etc.) or even more generally to other devices that benefit from the improvements of the present disclosure. For example, the terms loT device and A-loT device are used interchangeably in this disclosure; alternatively, the term low-power-consumption device or low-complexity transceiver device could be used instead as well. Examples for A-loT devices include - without any limitation - wearables, smart home devices, automotive devices, sensors, smart keys, healthcare devices, etc.

The term **"node"** refers to an entity communicating with an A-loT device and, for example, receiving information from or transmitting information to the A-loT device; it may be also referred to as a "reader". The "node/reader" can be e.g. a base station, or a UE or an intermediate node etc.

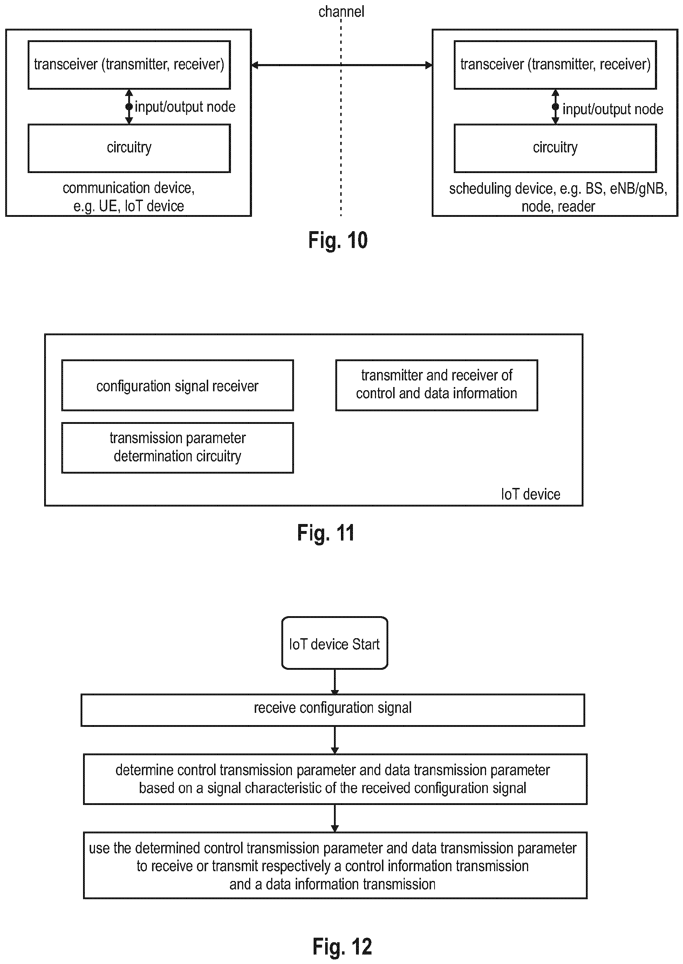

**Fig. 10** illustrates a general, simplified and exemplary block diagram of an loT device (as an example of a communication device) and a node (as an example of a scheduling device, could be also a base station, intermediate node connected to a base station or CW node) forming a communication system. In the following, it is exemplarily assumed that the node is a base station functioning as a scheduling device like an eNB or gNB (network node).

The communication device may comprise a transceiver and circuitry. The transceiver in turn may comprise and/or function as a receiver and a transmitter. The circuitry (e.g. processing circuitry) may be one or more pieces of hardware such as one or more processors or any LSIs. Between the transceiver and the circuitry there is an input/output point (or node) over which the circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The term "transceiver" is used for hardware and/or software components that allow the communication device, and the scheduling device to transmit and/or receive radio signals over the (wireless) channel, for example, a physical wireless channel. The transceiver, functioning as a transmitter, may be responsible for performing the process of transmitting and other processes related thereto. The transceiver, functioning as a receiver, may be responsible for performing the process of receiving and other processes related thereto, such as monitoring a channel. The transceiver may perform processes and operations, such as transmitting and/or receiving signals, as described with respect to the solutions of this disclosure.

The circuitry may implement control tasks such as controlling the transceiver to transmit user data and control data provided by the processing circuitry and/or receive user data and control data, which is further processed by the processing circuitry. The circuitry may also be responsible for performing other processes such as determining, deciding, calculating, measuring, etc. Moreover, the term "circuitry" can also be exemplarily implemented by processing circuitry formed by one or more processors or processing units, etc. The circuitry may perform any processes and operations, such as determinations, as described with respect to the solutions of this disclosure.

The loT device and the base station (eNB/gNB) are communicating with each other over a (wireless) physical channel, respectively, using their transceivers. The base station and the loT device are capable of transmitting as well as receiving radio signals via the channel. Together, the base station and the loT device form a communication, for example, a 5G or future communication system. The communication system may further include other entities such as further base stations, intermediate nodes and/or loT devices. Any of the solutions may be implemented in the loT device, the base station and/or communication system where appropriate.

Moreover, it is noted that the loT device as described in any of the solutions of this disclosure may be integrated on or as an integrated circuit (IC). Moreover, the integration does not necessarily include the entire transceiver. The transceiver is, in general, not necessarily a part of the loT device or the integrated circuit. The loT device may be connected to an external antenna (module) connected to the loT device over a port on the loT device. Similar structure applies to the node, which can also be integrated on or as an integrated circuit (IC).

Moreover, a computer program is provided including code instructions storable on a non-transitory medium, which when executed on one or more processors, causes the one or more processors to execute a method according to any of the solutions of this disclosure.

**Fig. 11** illustrates a simplified and exemplary loT device structure according to a basic implementation of the improved loT transmission procedure of a solution presented in more detail below. In one example, the loT device structure can be implemented based on the general communication device structure explained in connection with Fig. 10. The various structural elements of the loT device illustrated in said Fig. 11 can be interconnected between one another e.g., with corresponding input/output nodes (not shown) e.g., in order to exchange control and user data and other signals. Although not shown for illustration purposes, the loT device may include further structural elements.

As apparent from Fig. 11 the loT device may include a configuration signal receiver, a transmission parameter determination circuitry, and a transmitter and receiver for respectively transmitting and receiving control and data information.

The above control/data information transmitter and receiver can exemplarily be implemented based on the transceiver of the general communication device structure of Fig. 10, which however can also perform further functions as will become apparent from below. The transmission parameter determination circuitry can exemplarily be implemented based on the circuitry of the general communication device structure of Fig. 10, which however can also perform further functions as will become apparent from below.

One exemplary procedure is implemented by an loT device that includes the following. A transceiver of the loT device receives a configuration signal. A circuitry of the loT device determines a control transmission parameter and a data transmission parameter based on a signal characteristic of the received configuration signal. The transceiver uses the determined control transmission parameter and the determined data transmission parameter to receive or transmit respectively a control information transmission and a data information transmission.

A corresponding exemplary method comprises the following steps performed by an loT device:
receiving a configuration signal; and
determining a control transmission parameter and a data transmission parameter based on a signal characteristic of the received configuration signal,
using the determined control transmission parameter and the determined data transmission parameter to receive or transmit respectively a control information transmission and a data information transmission.

A corresponding sequence diagram for an exemplary loT device behaviour in line with the above-discussed loT device and loT device method is presented in **Fig. 12****.**

The above-described improved loT transmission procedure at the loT device facilitates achieving the objective and overcoming at least some of the drawbacks explained above. In particular, it facilitates using different transmission parameters for the control and data information transmissions, and thus facilitates achieving different levels of reliability of the respective transmissions. For instance, control information could be transmitted with a higher reliability compared to data information.

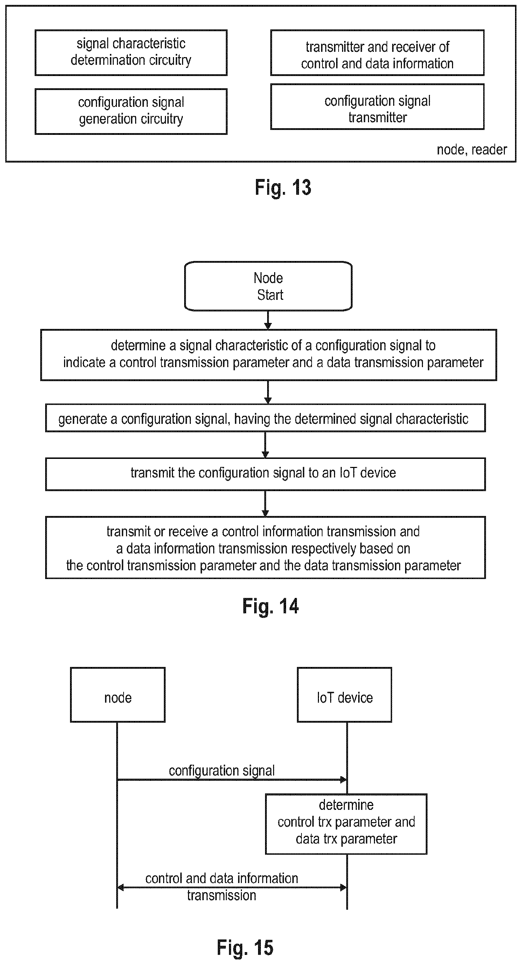

**Fig. 13** illustrates a simplified and exemplary node structure according to an exemplary implementation of the improved loT transmission procedure of a solution presented in more detail below. In one example, the node can be implemented based on the general node structure explained in connection with Fig. 10. The various structural elements of the node illustrated in said Fig. 13 can be interconnected between one another e.g., with corresponding input/output nodes (not shown) e.g., in order to exchange control and user data and other signals. Although not shown for illustration purposes, the node may include further structural elements.

As apparent from Fig. 13 the node may include a signal characteristic determination circuitry, a configuration signal generation circuitry, a configuration signal transmitter, and a transmitter and receiver for transmitting and receiving control and data information.

The above configuration signal transmitter and the transmitter and receiver can exemplarily be implemented based on the transceiver of the general communication device structure of Fig. 10, which however can also perform further functions as will become apparent from below. The signal characteristic determination circuitry and the configuration signal generation circuitry can exemplarily be implemented based on the circuitry of the general communication device structure of Fig. 10, which however can also perform further functions as will become apparent from below.

One exemplary procedure is implemented by a node that includes the following. A circuitry of the node determines a signal characteristic of a configuration signal to indicate a control transmission parameter and a data transmission parameter. The circuitry generates a configuration signal, having the determined signal characteristic. A transceiver of the node transmits the configuration signal to an Internet of Things, loT device, and further transmits or receives a control information transmission and a data information transmission respectively based on the control transmission parameter and the data transmission parameter.

A corresponding exemplary method comprises the following steps performed by a node:
determining a signal characteristic of a configuration signal to indicate a control transmission parameter and a data transmission parameter,
generating a configuration signal, having the determined signal characteristic,
transmitting the configuration signal to an Internet of Things, loT device, and further transmitting or receiving a control information transmission and a data information transmission respectively based on the control transmission parameter and the data transmission parameter.

A corresponding sequence diagram for an exemplary base station behaviour in line with the above-discussed node and node methods is presented in **Fig. 14****.**

The above-described improved loT transmission procedure at the node facilitates achieving the objective and overcoming at least some of the drawbacks explained above. In particular, it facilitates using different transmission parameters for the control and data information transmissions, and thus facilitates achieving different levels of reliability of the respective transmissions.

**Fig. 15** is a signaling diagram of an exemplary and simplified implementation of the improved loT transmission procedure, illustrating the exchange of messages between the different participating entities (here the loT device and node) and steps performed at these entities. The loT device behaviour and node behaviour follow the above described loT device and node as well as the respective methods.

As apparent from Fig. 15, the node transmits a configuration signal to the loT device, which in turn determines the control transmission parameter and the data transmission parameter from the received configuration signal. The loT device then transmits control and data information transmissions respectively using the previously-determined control and data transmission parameters.

The different processes at the loT device and node side have been explained with respect to above Fig. 11-15. More detailed and exemplary implementations of these processes of the improved loT transmission procedure will be explained in the following.

As presented above, using different transmission parameters for the transmission of the control information and the data information can be advantageous. In the following, first to fifth variants are exemplarily described based on using different chip durations, as an example of the different transmission parameters. However, the variants are not limited in said respect and are also applicable to the other transmission parameters, such as the bit transmission rate, coding rate, and repetition number, as will be explained below.

As presented above, the solutions are based on determining a signal characteristic of the configuration signal so as to then derive the different transmission parameter for the control and data information transmission. In the following, the first to fifth variants are exemplarily described based on a time duration, as an example of the signal characteristic, of the configuration signal. However, the variants are not limited in said respect and are also applicable to other signal characteristics, such as a frequency or signal amplitude as will be explained below

In many of the implementations of the variants, it is assumed that the chip duration for the control information transmission is longer than the chip duration for the data information transmission, e.g. in order to achieve a higher transmission reliability for the presumably more important control information. Correspondingly, the variants include determining the control chip duration from the corresponding transmission part that yields the longer time duration, while determining the data chip duration from that transmission part that yields the shorter time duration. However, this is only an example, and alternatively the chip duration for the data information transmission is longer than the chip duration for the control information transmission.

In the following, first to fifth variants of the above-explained solution are presented. In brief, according to the First Variant, the different control and data transmission parameters are determined based on a signal characteristic of separate transmission parts of the configuration signal. According to the Second Variant, the different control and data transmission parameters are determined based on a signal characteristic of overlapping transmission parts of a preamble transmission. According to the Third Variant, the different control and data transmission parameters are determined based on a signal characteristic of a transmission part of the preamble transmission jointly with an indication of subsequently transmitted control information. According to a Fourth Variant, different control and data transmission parameters to be used by a transmitting side for transmission are determined based on a configuration signal received from a receiving side. According to a Fifth Variant, different control and data transmission parameters to be used by a transmitting side for transmission are determined from a reference transmission parameter of a suitable signal received by the transmitting side.

### First Variant - separate transmission parts of configuration signal

As presented generally above, the solution according to the First Variant involves determining control and data transmission parameters based on a signal characteristic of the received configuration signal. According to the First Variant, the control transmission parameter and the data transmission parameter are determined by the circuitry based on the signal characteristic of separate transmission parts of the configuration signal. This facilitates determining the chip durations simply by using these separate transmission parts.

As an exemplary implementation of the First Variant, in the following it is assumed that the above-mentioned configuration signal is the transmission preamble. As an exemplary implementation of the First Variant, in the following it is assumed that the separate transmission parts are two On-durations of the configuration signal (e.g. of the transmission preamble). As an exemplary implementation of the First Variant, in the following it is assumed that the signal characteristic is the time duration, e.g. of the On-durations of the transmission preamble.

Furthermore, the transmitting side can be e.g. a base station or an loT device, and the receiving side can be conversely, e.g. an loT device or a base station. The following description of the First Variant is exemplarily assuming that the transmitting side is a base station and that the receiving side is an loT device.

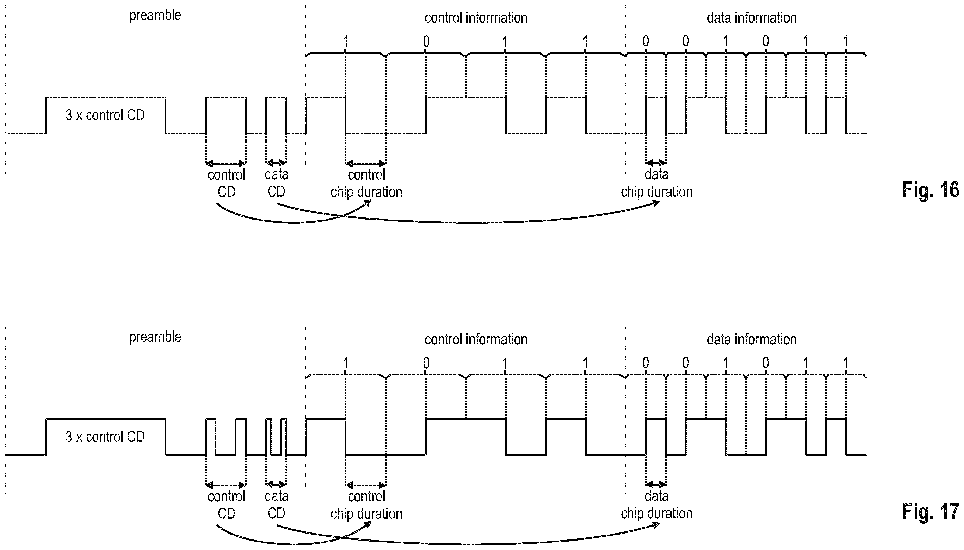

**Fig. 16** is an exemplary illustration for this implementation. As apparent therefrom, a transmission preamble is transmitted by a transmitting side (e.g. a base station) and received by a receiving side (e.g. an loT device) and is useful for indicating the start of a transmission (e.g. may also be used for harvesting energy at the loT device). The transmission preamble comprises two short On-durations as the above-mentioned separate transmission parts. The control transmission parameter and the data transmission parameter will be determined based on these two short On-durations. The transmission preamble exemplarily further comprises a long On-Duration, e.g. having a time duration of 3 x the short On-duration for the control information.

The content and sequence of the transmission preamble illustrated in Fig. 16 are only an example. Other sequences of On-durations and Off-durations are equally possible for the transmission preamble, provided the transmission preamble comprises at least two separate transmission parts from which the control and data transmission parameters can be determined.

As further apparent from Fig. 16, control information and data information are transmitted subsequently after the transmission preamble, respectively having a different chip duration (as the present example of a transmission parameter), termed in the following "control chip duration" and "data chip duration".

The receiving side (e.g. the loT device) receives first the transmission preamble from the transmitting side (e.g. a base station) and then can determine the control and data chip durations from the transmission preamble, specifically from a suitable signal characteristic (here e.g. the time duration) of the two separate On-durations of the preamble. Said determinations are illustrated with arrows in Fig. 16.

One of the two On-durations of the transmission preamble (here e.g. the first one) is indicative of the control chip duration, and another one of the two On-durations of the transmission preamble (here e.g. the second one) is indicative of the data chip duration.

In this example of Fig. 16, the time duration of the control-related On-duration of the preamble is the same as the control chip duration, and the time duration of the data-related On-duration of the preamble is the same as the data chip duration. This is however only an example, which facilitates a simple and efficient implementation. Alternatively, the control and data chip durations could be determined respectively using a scaling parameter in addition to the time duration of the control-and data-related On-durations of the preamble. For example, a scaling parameter of 1 would result in the above-assumed no-scaling implementation; a scaling parameter of 0,5 would result in that the control chip duration would be half of the time duration of the control-related On-duration, etc. Correspondingly, a more flexible implementation can be achieved thereby.

In any case, the loT device (as an example receiver) can easily determine the different chip durations employed for the control information transmission and the data information transmission.

In the above, the First Variant was explained exemplarily assuming that the separate transmission parts are two On-durations of the configuration signal (e.g. of the transmission preamble). In a further exemplary implementation of the First Variant, the separate transmission parts are not two On-durations but rather two separate sequences of On- and Off-durations (e.g. of the transmission preamble). **Fig. 17** is an exemplary illustration for this implementation. The transmission preamble now comprises two short On-durations for each of the above-mentioned two separate transmission parts, and in more detail, sequences of a short On-duration, an Off-duration and another short On-duration constitute the first and second of the two separate transmission parts. The time duration of each sequence, e.g. from the beginning of the sequence (here start of first On-duration) to the end of the sequence (here end of the second On-duration) is then the basis for determining the respective chip duration, be it for the control or data information transmission.

The receiving side (e.g. the loT device) receives first the transmission preamble from the transmitting side (e.g. a base station) and then can determine the control and data chip durations from the transmission preamble, specifically from a suitable signal characteristic (here e.g. the time duration) of the two separate sequences of On- and Off-durations of the preamble. Said determinations are illustrated with arrows in Fig. 17.

Again, in this example of Fig. 17, the time duration of the control-related sequence of the preamble is the same as the control chip duration, and the time duration of the data-related sequence of the preamble is the same as the data chip duration. Alternatively, the control and data chip durations could be determined respectively using a scaling parameter in addition to the time duration of the two control-and data-related sequences of the preamble.

In any case, the loT device (as an example receiver) can easily determine the different chip durations employed for the control information transmission and the data information transmission (with or without using an additional scaling parameter, see above example for Fig. 16).

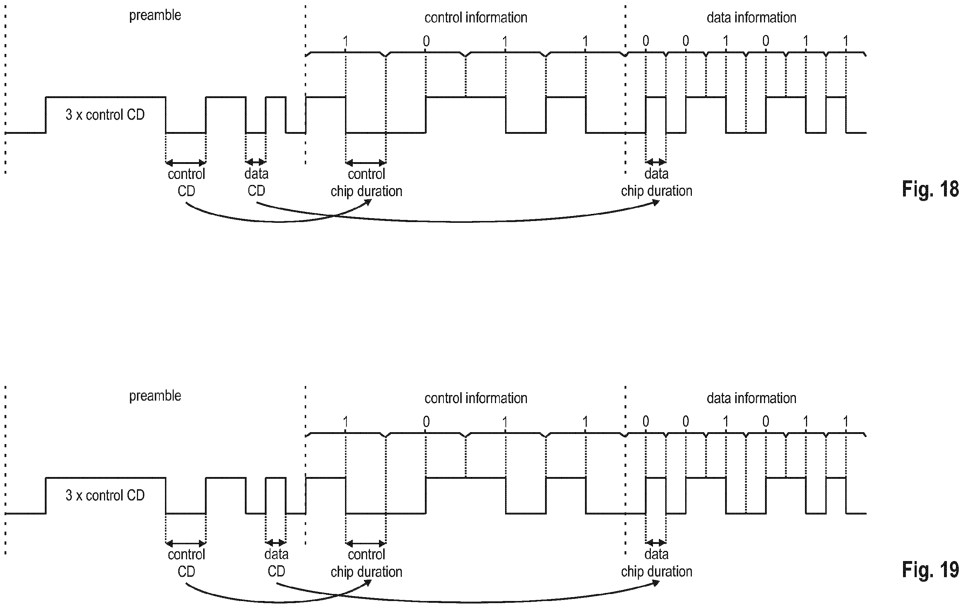

In the above, the First Variant was explained exemplarily assuming that the separate transmission parts are two On-durations of the configuration signal (e.g. of the transmission preamble). In a further exemplary implementation of the First Variant, the separate transmission parts are not two On-durations but rather two Off-durations of the configuration signal (e.g. of the transmission preamble). **Fig. 18** is an exemplary illustration for this implementation and is quite similar to Fig. 16. However, the relevant transmission parts are two Off-durations in the transmission preamble.

Correspondingly, the receiving side (e.g. the loT device) receives first the transmission preamble from the transmitting side (e.g. a base station) and then can determine the control and data chip durations from the transmission preamble, specifically from a suitable signal characteristic (here e.g. the time duration) of the two Off-durations of the preamble. Said determinations are illustrated with arrows in Fig. 18.

In any case, the loT device (as an example receiver) can easily determine the different chip durations employed for the control information transmission and the data information transmission (with or without using an additional scaling parameter, see above example for Fig. 16).

Still alternatively, a combination of one On-duration and one Off-duration can be used as the separate two transmission parts of the configuration signal (e.g. of the transmission preamble). **Fig. 19** is an exemplary illustration for this implementation and is quite similar to Fig. 16. However, the relevant transmission parts are one On-duration (here e.g. for the data chip duration) and one Off-duration (here e.g. for the control chip duration) in the transmission preamble.

Correspondingly, the receiving side (e.g. the loT device) receives first the transmission preamble from the transmitting side (e.g. a base station) and then can determine the control and data chip durations from the transmission preamble, specifically from a suitable signal characteristic (here e.g. the time duration) of the corresponding On- and Off-durations of the preamble. Said determinations are illustrated with arrows in Fig. 19.

In any case, the loT device (as an example receiver) can easily determine the different chip durations employed for the control information transmission and data information transmission (with or without using an additional scaling parameter, see above example for Fig. 16).

From the perspective of the transmitting side (e.g. the base station), the transmission preamble is generated in a suitable manner to result in one of the preambles described above in connection with e.g. Fig. 16-19. In particular, the signal characteristic (e.g. the time duration) of one of the transmission parts of the transmission preamble is determined to indicate the control transmission parameter (e.g. control chip duration), and the signal characteristic (e.g. the time duration) of another one of the transmission parts of the transmission preamble is determined to indicate the data transmission parameter (e.g. data chip duration). The transmitting side then transmits the transmission preamble to the receiving side, comprising the at least two transmission parts with the different signal characteristics (e.g. time durations).

In the above implementations, the First Variant was explained exemplarily based on that both of the two transmission parts are comprised in the transmission preamble. In a still further exemplary implementation, instead of both, only one of the two transmission parts is comprised in the transmission preamble, and the other one of the two transmission parts is not in the transmission preamble but rather between the control information transmission and the data information transmission. Correspondingly, the above-mentioned configuration signal is a combination of the transmission preamble and the additional transmission part between the control and data information transmissions.

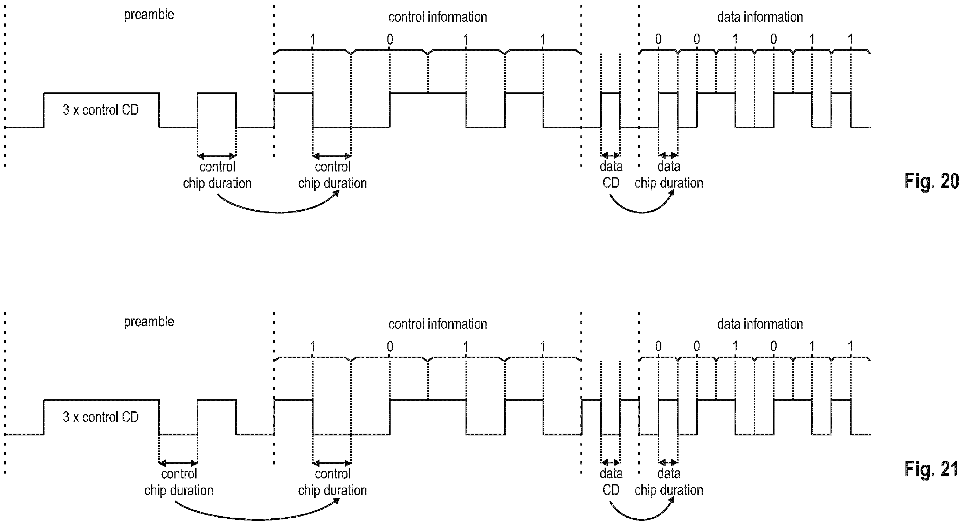

**Fig. 20** is an exemplary illustration for this implementation. The transmission preamble now comprises only one short On-duration (apart from the long On-duration), which here is for instance indicative of the control chip duration. The additional On-duration, between the control and data information transmission, is then indicative of the data chip duration.

Correspondingly, the receiving side (e.g. the loT device) receives first the transmission preamble from the transmitting side (e.g. a base station) and then can determine the control chip duration from the transmission preamble, specifically from a suitable signal characteristic (here e.g. the time duration) of the corresponding On-duration. Then, after the control information, the receiving side receives the additional transmission part before the data information transmission and can determine the data chip duration, specifically from a suitable signal characteristic (here e.g. the time duration) of the corresponding On-duration. Said determinations are illustrated with arrows in Fig. 20.

In any case, the loT device (as an example receiver) can easily determine the different chip durations employed for the control information transmission and data information transmission (with or without using an additional scaling parameter, see above example for Fig. 16).

In the above example implementation of Fig. 20, it was exemplarily assumed that each transmission part is an On-duration, and that the signal characteristic, here the time duration, of said On-duration is indicative of the respective control or data chip duration. With reference to the above Fig. 17 to 19, different alternatives for the transmission parts have been presented, i.e. separate sequences of On- and Off-durations (see Fig. 17), separate Off-durations (see Fig. 18), and a combination of one On-duration and one Off-duration (see Fig. 19). These transmission part alternatives are equally applicable to the implementation of Fig. 20, where only one of the two transmission parts is comprised in the transmission preamble, and the other one of the two transmission parts is between the control information transmission and the data information transmission.

**Fig. 21** is an illustration based on using two Off-durations as transmission parts; the other alternative transmission part implementations are not illustrated. Correspondingly, the receiving side receives first the transmission preamble from the transmitting side and then can determine the control chip duration from a suitable signal characteristic (here e.g. the time duration) of the corresponding Off-duration. After the control information, the receiving side receives the additional transmission part before the data information transmission and can determine the data chip duration from a suitable signal characteristic (here e.g. the time duration) of the corresponding Off-duration. Said determinations are illustrated with arrows in Fig. 21.

From the perspective of the transmitting side (e.g. the base station), the transmission preamble and the additional transmission part between the control information transmission and the data information transmission are generated in a suitable manner to result in one of the preambles as described above with reference to e.g. Fig. 20 and 21. In particular, the signal characteristic (e.g. the time duration) of the transmission part of the transmission preamble is determined to indicate the control transmission parameter (e.g. control chip duration), and the signal characteristic (e.g. the time duration) of the additional transmission part between the control information and the data information transmission is determined to indicate the data transmission parameter (e.g. data chip duration). The transmitting side then transmits the transmission preamble and the additional transmission part (as well as the control information and the data information) to the receiving side, with the different signal characteristics (e.g. time durations).

In the above implementations described in connection with Fig. 20 and 21, the receiving side determines the data chip duration from the additional transmission part (e.g. On-duration of Fig. 20), which is to be identified as not belonging to the control information and as not belonging to the data information. In one example, the length of the control information is known in advance by the receiving side such that the receiving side can determine when the control information transmission ends and when the additional transmission part for determining the data chip duration starts. For instance, the control information can be of a fixed length (e.g. 4 bits). In another example, the length of the control information can be variable, but its length can be indicated by other information such as the control information or some other system information. In a still further alternative, the change in the chip duration compared to the control information may already be indicative of the presence of the additional transmission part.

The above implementations described in connection with Fig. 20 and 21 are based on the transmission of the additional transmission part between the control information transmission and the data information transmission. In a further variant of these implementations, the additional transmission part is only transmitted in case the chip durations for the control information and data information are indeed different. The receiver determines whether the control chip duration and the data chip duration are different from one another, e.g. based on an indication in the control information transmission.

Correspondingly, in case the data chip duration is not different from the control chip duration, the data chip duration can be determined to be the same as the control chip duration; therefore, the additional transmission part after the control information need not be transmitted and need not be received. Conversely, in case the data chip duration is different from the control chip duration, the receiving side assumes that the additional transmission part is transmitted after the control information and correspondingly receives and processes it to determine the data chip duration.

From the perspective of the transmitting side (e.g. the base station), the base station sets the indication in the control information transmission accordingly to indicate whether the control chip duration and data chip duration are different from one another. In case the data chip duration is not different from the control chip duration, the base station does not transmit the additional transmission part between the control information transmission and the data information transmission. Conversely, in case the data chip duration is different from the control chip duration, the base station transmits the additional transmission part between the control information transmission and the data information transmission.

The implementations of the First Variant were so far described based on the exemplary assumption that the relevant signal characteristic of the transmission part for determining the control and data chip durations is the time duration (e.g. of the On-duration, Off-duration or sequence of On /Off-durations). As another alternative, instead of the time duration, other signal characteristics of the transmission parts can be used as well.

For example, the transmission could be transmitted utilizing FSK (Frequency Shift Keying), and the utilized frequency could be indicative of the transmission parameter, e.g. of the chip duration, the bit transmission rate, the coding rate or the repetition number.

As a further alternative, the amplitude of the transmission parts could be used as the signal characteristic, where different amplitudes are indicative of different transmission parameters (e.g. different chip durations).

The First Variant and the implementations thereof are exemplarily described based on using different chip durations, as an example of the different transmission parameters used for the control and data information transmissions. Correspondingly, according the First Variant, the receiving side determines the control respectively data chip duration from the time duration of the respective control- or data-related transmission parts. However, the First Variant is not limited in said respect and is also applicable to the other transmission parameters, such as the bit transmission rate, coding rate, and repetition number.

In more detail, the receiving side is able to determine the different transmission parameters for control and data (e.g. one of the bit transmission rate, the coding rate and the repetition number) from the time duration (as an example of the signal characteristic) of the control- and data-related transmission parts.

For any of these alternatives, the receiving side can use configuration information obtained in advance to determine the transmission parameters for control and data from the time duration of the control- and data-related transmission parts (e.g. of the preamble). Said configuration information may e.g. be hard-coded into the receiving side device (e.g. at the loT device) or configured during operation, e.g. during a registration phase or later in a configuration message.

For example, when assuming the bit transmission rate as the transmission parameter, different time durations of a control/data-related transmission part are associated with different bit transmission rates. Correspondingly, when the receiver determines a time duration of a control- or data-related transmission part, it can determine the associated bit transmission rate for the control information transmission respectively data information transmission.

For example, when assuming the coding rate as the transmission parameter, different time durations of a control/data-related transmission part are associated with different coding rates. Correspondingly, when the receiver determines a time duration of a control- or data-related transmission part, it can determine the associated coding rate for the control information transmission respectively data information transmission.

For example, when assuming the transmission repetition as the transmission parameter, different time durations of a control/data-related transmission part are associated with different transmission repetitions. Correspondingly, when the receiver determines a time duration of a control- or data-related transmission part, it can determine the associated transmission repetition for the control information transmission respectively data information transmission.

The determination of the different transmission parameters of the control/data information transmissions from the corresponding signal characteristic of the control/data-related transmission parts is not limited to the above example of using configuration information. As an alternative, a ratio of the signal characteristic of transmission parts (e.g. of the preamble) can be determined and used for then determining the transmission parameters. In one example, the ratio between the time duration of the control-related transmission part and the time duration of the initial long On-duration of the preamble (e.g. 1 to 3) could be used as the coding rate (1/3) for the control information. Similarly, the ratio between the time duration of the data-related transmission part and the time duration of the initial long On-duration of the preamble (e.g. 1 to 6) could be used as the coding rate (1/6) for the data information.

The First Variant and the implementations described in said respect are applicable to transmissions from the reader to the loT device (R2D) and also to transmissions from the loT device to the reader (D2R).

### Second Variant - overlapping transmission parts of preamble

The solution according to the Second Variant involves that the different control and data transmission parameters are determined based on a signal characteristic of overlapping transmission parts of a preamble transmission. Compared to the First Variant, the Second Variant is based on the idea that the two transmission parts, used for determining the respective control/data transmission parameters are not separate but rather overlapping. Using overlapping transmission parts facilitates using a shorter preamble for indicating different chip durations, compared to using separate transmission parts as in the First Variant.

In the following, the Second Variant will be described with the exemplary assumption that the signal characteristic is the time duration, e.g. of the On/Off-durations of the transmission preamble. The above mentioned configuration signal is the transmission preamble.

Furthermore, the transmitting side can be e.g. a base station or an loT device, and the receiving side can be conversely, e.g. an loT device or a base station. The following description of the Second Variant is exemplarily assuming that the transmitting side is a base station and that the receiving side is an loT device.

A transmission preamble is transmitted by a transmitting side (e.g. a base station) and received by a receiving side (e.g. an loT device) and is useful for indicating the start of a transmission (e.g. may also be used for harvesting energy at the loT device). The transmission preamble comprises two transmission parts that are overlapping in time, e.g. one longer On-duration and an overlapping shorter Off-duration, wherein the shorter Off-duration is within (or put differently, covers) the longer On-duration. In still other words, there is a masking of the On-duration with the Off-duration.

The overlapping On/Off-durations define different time durations that can be used to determine the different control and data transmission parameters for the control and data information transmissions. In more detail, the time duration of the longer On-duration can be used to determine the transmission parameter for the control or data information transmission, and the time duration of the shorter Off-duration (within the longer On-duration) can be used to determine the transmission parameter of the data or control information transmission.

Compared to the First Variant, the two transmission parts, used for determining the respective control/data transmission parameters are not separate but rather overlapping.

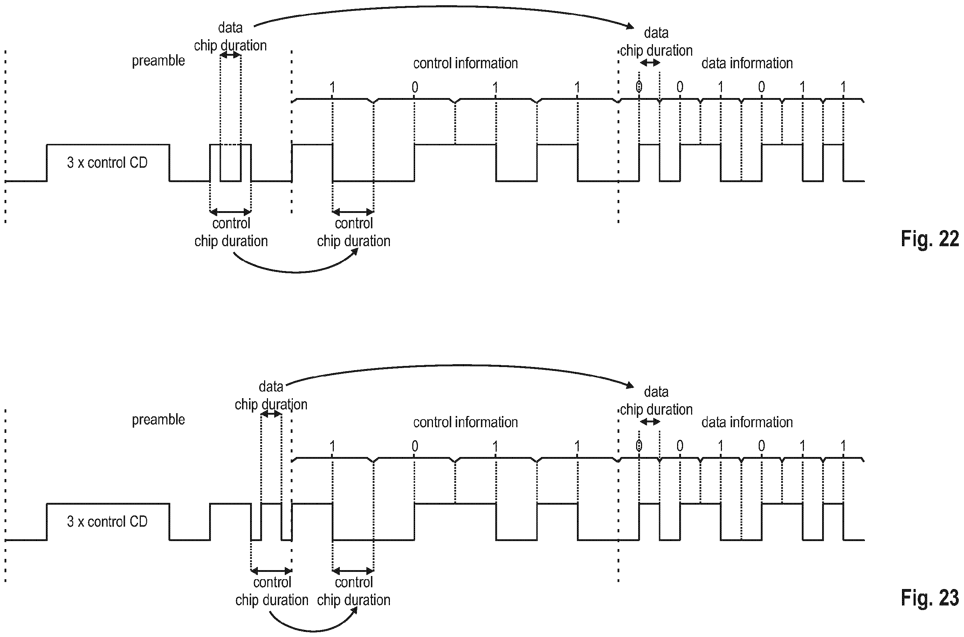

**Fig. 22** is an exemplary illustration for an implementation of the Second Variant. As apparent therefrom, a transmission preamble is transmitted by a transmitting side (e.g. a base station) and received by a receiving side (e.g. an loT device). The transmission preamble comprises two transmission parts that are overlapping, on which basis the control transmission parameter and the data transmission parameter will be determined. The transmission preamble exemplarily further comprises a long On-Duration, e.g. having a time duration of 3 x the short On-duration for the control information.

The content and sequence of the transmission preamble illustrated in Fig. 22 are only an example. Other sequences of On-durations and Off-durations are equally possible for the transmission preamble, provided the transmission preamble comprises at least two overlapping transmission parts from which the control and data transmission parameters can be determined.

As further apparent from Fig. 22, control information and data information are transmitted subsequently after the transmission preamble, respectively having different chip durations (as the present example of a transmission parameter).

The receiving side (e.g. the loT device) receives first the transmission preamble from the transmitting side (e.g. a base station) and then can determine the control and data chip durations from the transmission preamble, specifically from the time duration of the two overlapping transmission parts. Said determinations are illustrated with arrows in Fig. 22.

One of the two transmission parts of the transmission preamble (here e.g. the first longer On-duration) is indicative of the control chip duration, and another one of the two transmission parts of the transmission preamble (here e.g. the second in-between Off-duration) is indicative of the data chip duration.

In this example of Fig. 22, the time duration of the control-related On-duration of the preamble is the same as the control chip duration, and the time duration of the data-related Off-duration of the preamble (within the control-related On-duration) is the same as the data chip duration. This is however only an example, which facilitates a simple and efficient implementation. Alternatively, the control and data chip durations could be determined respectively using a scaling parameter. For example, a scaling parameter of 1 would result in the above-assumed no-scaling implementation; a scaling parameter of 0,5 would result in that the control chip duration would be half of the time duration of the control-related On-duration, etc. Correspondingly, a more flexible implementation can be achieved.

In any case, the loT device (as an example receiver) can easily determine the different chip durations employed for the control information transmission and the data information transmission.

As another example, the Second Variant can be explained differently. In particular, the transmission preamble includes two subsequent short On-durations, where the time duration of the two subsequent On-durations (e.g. from the beginning of the first On-duration to the end of the second On-duration) is indicative of the control chip duration. Within said two subsequent short On-durations, the time duration of the Off-duration is indicative of the data chip duration.

In the above, the Second Variant was explained exemplarily assuming that a shorter Off-duration is within a longer On-duration (see Fig. 22). A further exemplary implementation of the Second Variant involves that a shorter On-duration is within a longer Off-duration. One of the two transmission parts of the transmission preamble (here e.g. the first longer Off-duration) will be indicative of the control chip duration, and another one of the two transmission parts of the transmission preamble (here e.g. the second in-between On-duration) will be indicative of the data chip duration.

Fig. 23 is an exemplary illustration for such an implementation of the Second Variant and illustrates the longer Off-duration, with a shorter On-duration being located in between.

In any case, the loT device (as an example receiver) can easily determine the different chip durations employed for the control information transmission and the data information transmission (with or without using an additional scaling parameter, see above example for Fig. 22).

From the perspective of the transmitting side (e.g. the base station), the transmission preamble is generated in a suitable manner to result in one of the preambles described above in connection with Fig. 22 or 23. In particular, the signal characteristic (e.g. the time duration) of one of the two overlapping transmission parts of the transmission preamble is determined to indicate the control transmission parameter (e.g. control chip duration), and the signal characteristic (e.g. the time duration) of the other one of the two overlapping transmission parts of the transmission preamble is determined to indicate the data transmission parameter (e.g. data chip duration). The transmitting side then transmits the transmission preamble to the receiving side, comprising the at least two overlapping transmission parts with the different signal characteristics (e.g. time durations).

The implementations of the Second Variant were so far described based on the exemplary assumption that the relevant signal characteristic of the transmission part for determining the control and data chip durations is the time duration (e.g. of the On, Off-durations). As another alternative, instead of the time duration, other signal characteristics of the transmission parts can be used as well. As presented already for the First Variant, other signal characteristics could be the utilized frequency or amplitude of the transmission parts (see above details with respect to the First Variant).

The Second Variant and the implementations thereof are exemplarily described based on using different chip durations, as an example of the different transmission parameters. Correspondingly, according the Second Variant, the receiving side determines the control respectively data chip duration from the time duration of the respective overlapping control- or data-related On- and Off-durations. However, the Second Variant is not limited in said respect and is also applicable to the other transmission parameters, such as the bit transmission rate, coding rate, and repetition number.

In more detail, the receiving side is able to determine the different transmission parameters for control and data (e.g. one of the bit transmission rate, the coding rate and the repetition number) from the time duration (as an example of the signal characteristic) of the overlapping control- and data-related On- and Off-durations.

For any of these alternatives, the receiving side can use configuration information obtained in advance to determine the transmission parameter for control and data from the time duration of the overlapping control- and data-related On- and Off-durations. Said configuration information may e.g. be hard-coded into the receiving side device (e.g. at the loT device) or configured, e.g. during a registration phase or later in a configuration message.

For example, when assuming the bit transmission rate as the transmission parameter, different time durations of a control/data-related On- or Off-duration are associated with different bit transmission rates. Correspondingly, when the receiver determines a time duration of a control/data-related On- or Off-duration, it can determine the associated bit transmission rate for the control information transmission respectively data information transmission.

For example, when assuming the coding rate as the transmission parameter, different time durations of a control/data-related On- or Off-duration are associated with different coding rates. Correspondingly, when the receiver determines a time duration of a control/data-related On- or Off-duration, it can determine the associated coding rate for the control information transmission respectively data information transmission.

For example, when assuming the transmission repetition as the transmission parameter, different time durations of a control/data-related On- or Off-duration are associated with different transmission repetitions. Correspondingly, when the receiver determines a time duration of a control/data-related On- or Off-duration, it can determine the associated transmission repetition for the control information transmission respectively data information transmission.

The determination of the different transmission parameters of the control/data information transmissions from the corresponding signal characteristic of a control/data-related On- or Off-durations is not limited to the above example of using configuration information. As already presented above for the First Variant, an alternative could be based on a ratio of the signal characteristic of different transmission parts (e.g. of the preamble). Further details are provided above with respect to the First Variant and are also applicable for the Second Variant. The Second Variant and the implementations described in said respect are applicable to transmissions from the reader to the loT device (R2D) and also to transmissions from the loT device to the reader (D2R).

### Third Variant - joint use of preamble and control information

The solution according to the Third Variant involves that the different control and data transmission parameters are determined based on a signal characteristic of a transmission part of the preamble transmission jointly with an indication of transmitted control information. Since only a single chip duration is used in the preamble for determining a transmission parameter, the Third Variant facilitates using a shorter preamble transmission compared to using separate transmission parts as in the First Variant.

In the following, the Third Variant will be described with the exemplary assumption that the transmission part of the preamble transmission is an On-duration, and that the signal characteristic is the time duration, e.g. of the On-duration of the transmission preamble. The above-mentioned configuration signal is a combination of the transmission preamble and the indication of the control information transmission.

Furthermore, the transmitting side can be e.g. a base station or an loT device, and the receiving side can be conversely, e.g. an loT device or a base station. The following description of the Third Variant is exemplarily assuming that the transmitting side is a base station and that the receiving side is an loT device.

According to the Third Variant, a transmission preamble and a subsequent control information transmission are transmitted by a transmitting side (e.g. a base station) and received by a receiving side (e.g. an loT device). The transmission preamble comprises at least one transmission part, here exemplary assuming an On-duration. In more detail, the time duration (as the present example for a signal characteristic) of the On-duration of the transmission preamble can be used to determine the chip duration (as the present example for a transmission parameter) for the control information transmission.

After having determined the control chip duration, the receiver can properly receive the control information transmission. Furthermore, the control information transmission, subsequent to the preamble, comprises an indication to be used for determining the chip duration for the data information transmission. In one example, the control information may directly indicate the data chip duration, e.g. by indicating an index to a table with different data chip duration values.

In another example, the control chip duration is to be used as a reference for determining the data chip duration, and the control information may indicate a scaling parameter value to be used together with the previously-determined control chip duration. Based on both the indicated scaling parameter value and the previously determined control chip duration, the data chip duration can be determined. For instance, the data chip duration is determined by multiplying the indicated scaling parameter value with the previously determined control chip duration.

In one example implementation, the scaling parameter value is determined based on the indication in the control information transmission alone or together with association information. In an example, the control information contains a bit field indication (e.g. of 2 bits) for a scaling parameter value. Further, the following table provides an example of association information associating different 2-bit indication values and different scaling parameter values.

| **Indication bits** | **Scaling parameter value** |
|---|---|
| 00 | 1 |
| 01 | 0,5 |
| 10 | 0,25 |
| 11 | 0,125 |

For instance, indicating "00" in the control information would result in a scaling parameter value of 1 and thus effectively in no scaling of the data chip duration compared to the control chip duration. On the other hand, by indicating "01" in the control information, a scaling parameter value of 0,5 would be indicated such that the resulting data chip duration would be half of the control chip duration.

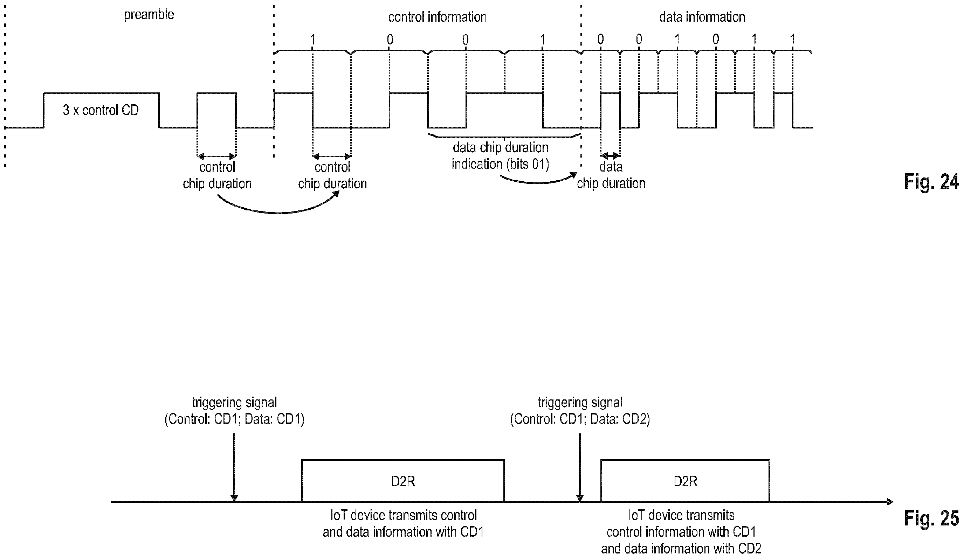

**Fig. 24** is an exemplary illustration for an implementation of the Third Variant and illustrates the On-duration of the transmission preamble for determining the control chip duration and illustrates the data chip duration indication within the control information transmission. The transmission preamble exemplarily further comprises a long On-Duration, e.g. having a time duration of 3 x the short On-duration for the control information.

The content and sequence of the transmission preamble illustrated in Fig. 24 are only an example. Other sequences of On-durations and Off-durations are equally possible for the transmission preamble, provided the transmission preamble comprises at least the transmission part from which the control transmission parameter can be determined.

As further apparent from Fig. 24, control information and data information are transmitted subsequently after the transmission preamble, respectively having different chip durations.

The receiving side (e.g. the loT device) receives first the transmission preamble from the transmitting side (e.g. a base station) and then can determine the control chip duration from the transmission preamble, specifically from the time duration of the On-duration. Said determination is illustrated with an arrow in Fig. 24.

The receiving side receives the control information using the determined control chip duration. Within the control information transmission having 4 bits, the 2 last two bits are exemplarily assumed to carry the scaling parameter indication (here exemplarily termed "data chip duration indication"). In the particular example of Fig. 24, the data chip duration indication indicates the bits 01, which using the above table, is indicative of the corresponding scaling parameter value of 0,5. Correspondingly, the data chip duration is half of the control chip duration.

In this example of Fig. 24, the time duration of the On-duration of the transmission preamble is the same as the control chip duration. This is however only an example, which facilitates a simple and efficient implementation. Alternatively, the control chip duration could be determined respectively also using another scaling parameter. For example, a scaling parameter of 1 would result in the above-assumed no-scaling implementation; a scaling parameter of 0,5 would result in that the control chip duration would be half of the time duration of the On-duration of the preamble, etc. Correspondingly, a more flexible implementation can be achieved for determining the control chip duration. In addition, the data-related scaling parameter introduced with the Third Variant would be used together with the finally determined control chip duration (irrespective of whether or not the control chip duration is scaled with respect to the time duration of the On-duration of the transmission preamble).

In any case, the loT device (as an example receiver) can easily determine the different chip durations employed for the control information transmission and the data information transmission.

From the perspective of the transmitting side (e.g. the base station), the transmission preamble is generated in a suitable manner to result in one of the preambles as described above with reference to e.g. Fig. 24.. In particular, the signal characteristic (e.g. the time duration) of the transmission part of the transmission preamble is determined to indicate the control transmission parameter (e.g. control chip duration). Correspondingly, the base station determines the data transmission parameter and sets the indication within the control information to the corresponding bit value. The indication of the control information is set to indicate a scaling parameter value, such that the control transmission parameter (e.g. the control chip duration) multiplied with the scaling parameter value results in the intended data transmission parameter (e.g. the data chip duration).

In the above example implementation of Fig. 24, it was exemplarily assumed that the transmission part of the transmission preamble for determining the control chip duration is an On-duration. With reference to the above Fig. 17 to 19 of the First Variant, different alternatives for a transmission part have been presented, i.e. separate sequences of On- and Off-durations (see Fig. 17), separate Off-durations (see Fig. 18), and a combination of one On-duration and one Off-duration (see Fig. 19). These transmission part alternatives are equally applicable to the implementation of the Third Variant, where one transmission part is comprised in the transmission preamble. Correspondingly, instead of using an On-duration as the transmission part of the transmission preamble for determining the control chip duration, other implementations of the Third Variant are based on using a sequence of On- and Off-durations (see Fig. 17) or an Off-duration (Fig. 18) as the transmission part of the transmission preamble for determining the control chip duration.

In the above implementations of the Third Variant, the indication in the control information indicates a scaling parameter value for determining the data chip duration from the previously-determined control chip duration. In further exemplary implementations of the Third Variant, the indication in the control information not only indicates the scaling parameter value but may also indicate one or more of other transmission parameters for the control and/or data information transmissions, e.g., the coding rate and repetition number.

The following table presents an example of association information associating different indication values (e.g. having 2 bits) and different values for the transmission parameters, such as a scaling parameter, a coding rate, and a repetition number for control and data.

| Indication bits | Scaling parameter value | Coding rate | Control repetition | Data repetition |
|---|---|---|---|---|
| 00 | 1 | 0,5 | 1 | 1 |
| 01 | 0,5 | 0,5 | 1 | 1 |
| 10 | 0,25 | 0,5 | 1 | 2 |
| 11 | 0,125 | 0,3 | 1 | 3 |

For instance, indicating "00" in the control information would result in a scaling parameter value of 1 and thus effectively in no scaling of the data chip duration compared to the control chip duration. At the same time, indicating "00" in the control information would indicate a coding rate of 0,5 for the data information transmission, and a control and data repetition of 1, meaning that there are no additional repetitions for both control and data information.

On the other hand, by indicating "10" in the control information, a scaling parameter value of 0,25 would be indicated such that the resulting data chip duration would be ¼ of the control chip duration. At the same time, indicating "10" in the control information would indicate a coding rate of 0,5 for the data information transmission, and a control and data repetition of 1 respectively 2, meaning that no repetition of the control information occurs and that one repetition of the data information occurs.

The implementations of the Third Variant were so far described based on the exemplary assumption that the relevant signal characteristic of the transmission part of the signal for determining the control chip duration is the time duration (e.g. of the On-duration, Off-duration or sequence of On /Off-durations in the preamble). As another alternative, instead of the time duration, other signal characteristics of the transmission parts can be used as well. As presented already for the First Variant, other signal characteristics could be the utilized frequency or amplitude of the transmission parts (see above details with respect to the First Variant).

The Third Variant and the implementations thereof are exemplarily described based on using different chip durations, as an example of the different transmission parameters used for the control and data information transmissions. Correspondingly, according the Third Variant, the receiving side determines the control respectively data chip duration. However, the Third Variant is not limited in said respect and is also applicable to the other transmission parameters, such as the bit transmission rate, coding rate, and repetition number.

In more detail, the receiving side is able to determine the different transmission parameters for control and data (e.g. one of the bit transmission rate, the coding rate and the repetition number) from the control- and data-related transmission parts.

For any of these alternatives, the receiving side can use configuration information obtained in advance to determine the transmission parameter for control from the time duration of the control-related transmission part of the transmission preamble. Said configuration information may e.g. be hard-coded into the receiving side device (e.g. at the loT device) or configured, e.g. during a registration phase or later in a configuration message.

For example, when assuming the bit transmission rate as the transmission parameter, a time duration of the control-related transmission part of the transmission preamble is associated with a bit transmission rate for the control information transmission. Then, the receiving side can determine the bit transmission rate for the data information transmission using the control bit transmission rate as reference as well as the scaling parameter value from the indication in the control information transmission. Correspondingly, the receiver can determine the associated bit transmission rates for the control information transmission respectively data information transmission.

For example, when assuming the coding rate as the transmission parameter, a time duration of the control-related transmission part of the transmission preamble is associated with a coding rate for the control information transmission. Then, the receiving side can determine the coding rate for the data information transmission using the control coding rate as reference as well as the scaling parameter value from the indication in the control information transmission. Correspondingly, the receiver can determine the associated coding rates for the control information transmission respectively data information transmission.

For example, when assuming the transmission repetition as the transmission parameter, a time duration of the control-related transmission part of the transmission preamble is associated with a transmission repetition for the control information transmission. Then, the receiving side can determine the transmission repetition for the data information transmission using the control transmission repetition as reference as well as the scaling parameter value from the indication in the control information transmission. Correspondingly, the receiver can determine the associated transmission repetitions for the control information transmission respectively data information transmission.

The determination of the different transmission parameters of the control/data information transmissions from the corresponding signal characteristic of the control/data-related transmission parts is not limited to the above example of using configuration information. As already presented above for the First Variant, an alternative could be based on a ratio of the signal characteristic of different transmission parts (e.g. of the preamble). Further details are provided above with respect to the First Variant and are also applicable for the Third Variant.

The Third Variant and the implementations described in said respect are applicable to transmissions from the reader to the loT device (R2D) and also to transmissions from the loT device to the reader (D2R).

### Fourth Variant - determination of transmission parameters for transmission

The solution according to the Fourth Variant is directed at determining the control transmission parameter and the data transmission parameter that are usable for transmission. In one example, the Fourth Variant allows a reader to control one or more transmission parameters employed by the transmitting side (e.g. the loT device) to generate and transmit control and data information.

The Fourth Variant and the implementations described in said respect are thus applicable not exclusively but primarily to transmissions from the loT device to the reader (D2R).

According to the Fourth Variant, the reader transmits a configuration signal to the loT device. The loT device determines the control transmission parameter and the data transmission parameter usable for transmission based on the configuration signal (e.g. including a suitable indication therein).

In one example implementation of the Fourth Variant, the control and data transmission parameters can be pre-configured, defined semi-statically, indicated dynamically or selected based on other parameters, such as the channel quality and/or an amount of control and data information. The present Fourth Variant thus facilitates a high flexibility for configuring and reconfiguring the transmission parameters for control and data at different stages of the operation of the loT device.

According to an example implementation, the control and data transmission parameters are pre-configured, such that the loT has a stored configuration, which was previously configured based on the configuration signal received from the reader. The configuration defines a default transmission parameter for the control and data information transmissions. For instance, the loT device could be pre-configured to use half the chip duration for the data information compared to the control information.

According to another example implementation, the control and data transmission parameters can be further defined semi-statically at a later point in time, e.g. during the device registration with the network. This allows to change or override the pre-configured default transmission parameter (see antecedent example implementation).

According to still another example implementation, the control and data transmission parameters can be indicated dynamically using a configuration signal, such as a triggering signal that triggers the transmitting side (e.g. the loT device) to transmit some information (be it control and/ or data), e.g. back to the reader. In one example, the triggering signal could include the ID of the loT device. For instance, the loT device, in response to the triggering signal, checks whether information is to be transmitted, and if so, transmits the information (e.g. to the reader). The triggering signal could further include an indication of different transmission parameters to be used by the loT device for generating and transmitting the control and data information.

**Fig. 25** is an exemplary illustration for an implementation of a dynamic configuration of the control and data transmission parameters according to the Fourth Variant. It illustrates schematically two instances of a triggering signal followed by a D2R transmission, where the triggering signal indicates the control and data chip durations (as examples of the control and data transmission parameters). In the first instance, the reader transmits a triggering signal for a D2R transmission, indicating a chip duration 1 (CD1) for both control and data information. In response to the triggering signal, the loT device determines the chip duration CD1 for both control and data information transmissions and transmits the control information and data information using CD1.

In the second instance, the reader transmits another triggering signal for a D2R transmission, now indicating a chip duration 1 (CD1) for the control information transmission and a chip duration 2 (CD2) for the data information transmission. In response to the triggering signal, the loT device transmits control information with a chip duration CD1 and transmits data information with a chip duration CD2.

According to still another example implementation of the Fourth Variant, the control and data transmission parameters can be determined based on other parameters, such as the channel quality (of the channel between the loT device and the reader) and/or the amount of control respectively data information. In particular, the loT device can be configured on how it should determine the control and data transmission parameters, e.g. based on the amount of control respectively data information to be transmitted by the loT device.

Furthermore, a triggering signal could for instance indicate the channel access time, e.g. the maximum time duration that the loT device can use the channel for the corresponding D2R transmission. Based on the channel access time and the amount of control respectively data information, the loT device can select suitable control and data transmission parameters.

In one example, the loT device may select a chip duration 2 (CD2) (as an example transmission parameter) to carry 200 bits of control and data information. In another instance, the loT device may select a chip duration 1 (CD1) (as an example transmission parameter), which is twice the CD2) to carry 100 bits of control and data information over the same channel access time.

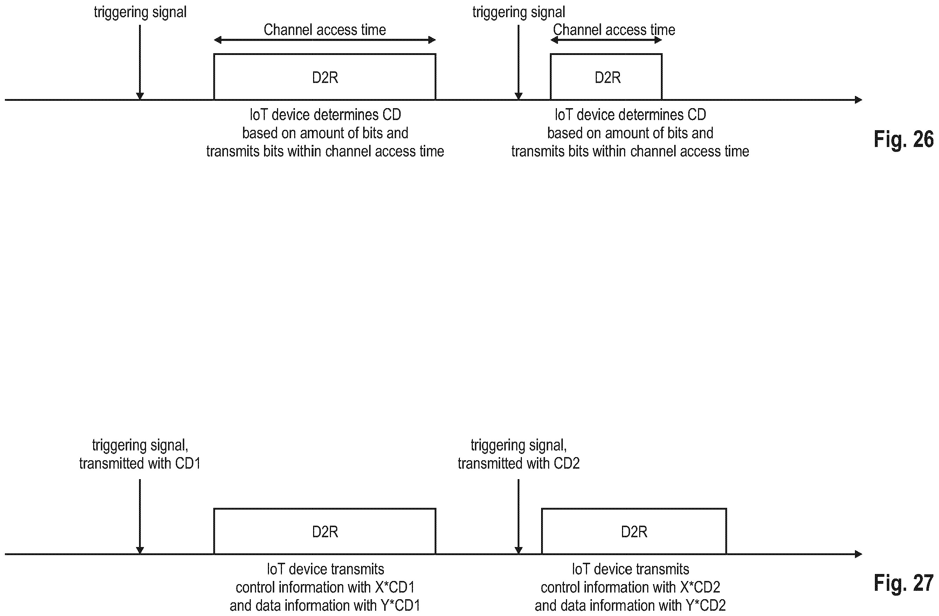

**Fig. 26** is an exemplary illustration for an implementation of a determining the control and data transmission parameters according to the Fourth Variant, using other parameters such as the number of bits. It illustrates schematically two instances of a triggering signal followed by a D2R transmission, where the triggering signal indicates a channel access time to be used in the context of determining the control and data chip durations (as examples of the control and data transmission parameters).

### Fifth Variant -D2R transmission parameters based on R2D transmission parameter

The solution according to the Fifth Variant is directed at determining the control transmission parameter and the data transmission parameter that are usable for transmission. In one example, the Fifth Variant allows a reader to control one or more transmission parameters employed by the transmitting side (e.g. the loT device) to generate and transmit control and data information.

The Fifth Variant and the implementations described in said respect are thus applicable not exclusively but primarily to transmissions from the loT device to the reader (D2R).

According to the Fifth variant, the reader transmits a suitable signal to the loT device (as an example of a transmitting side), which allows the transmitting side (receiving said signal) to determine a reference transmission parameter (e.g. a chip duration), from which the transmitting side can then determine, together with scaling parameter values, the corresponding transmission parameters (e.g. chip duration) for the control information transmission and the data information transmission. The above-mentioned configuration signal is thus the just-mentioned signal transmitted by the reader to the loT device. The Fifth Variant has the advantage that is facilitates a dynamic change of the control and data transmission parameters, under control of the reader which determines the reference transmission parameter.

Correspondingly, the transmitting side determines the control transmission parameter and the data transmission parameter usable for transmission based on a transmission parameter usable for reception of a suitable signal and on scaling parameter values related to the control information transmission and the data information transmission.

In one example, the signal transmitted by the reader to the transmitting side is a triggering signal, which triggers the transmitting side (e.g. the loT device) to transmit some information (be it control and/ or data), e.g. back to the reader. In one example, the triggering signal could include the ID of the loT device. For instance, the loT device, in response to the triggering signal, checks whether information is to be transmitted, and if so, transmits the information (e.g. to the reader).

In another example, the signal is not a triggering signal but another type of signal transmitted from the reader to the loT device, such as a system information signal, which carries system information.

In either case, the signal is transmitted from the reader to the loT device, using a transmission parameter, such as a chip duration, a bit transmission rate, a coding rate, or a repetition number. This transmission parameter for receiving the signal is determined by the loT device and used as a reference for then determining a transmission parameter for the transmission of the control and/or data information. In the following, it is exemplarily assumed that the transmission parameter of the signal is the chip duration.

The chip duration (as the present example of the transmission parameter) of the received signal can be determined by the loT device. It is exemplarily assumed that only one chip duration is used for the received signal. The chip duration of the received signal can be determined for instance based on an indication in the received signal, e.g. directly indicating the chip duration.

Alternatively, the chip duration of the received signal can be determined for instance based on a signal characteristic (e.g. a time duration) of a transmission part of the received signal, e.g. in the same or similar manner as determining the control chip duration according to one of the First, Second and Third Variants (and their respective implementations). In particular, the received signal, e.g. the triggering signal, can be structured the same or similar to the signal assumed as a basis for the First, Second and Third Variants, e.g. comprising a transmission preamble (and possibly a control and data transmission information). The transmission preamble can be indicative of the chip duration used for the entire signal, e.g. based on the time duration of a transmission part (e.g. an On-duration, an Off-duration, a sequence of On- and Off-durations) of the preamble.

Furthermore, the above-mentioned scaling parameter values are configured to the loT device in advance, such that they are available to the loT device when determining the corresponding control and data transmission parameters based on the received signal. For example, the scaling parameter values can be configured based on configuration information, which may be e.g. hard-coded into the loT device or configured during operation, e.g. during a registration phase or later in a configuration message.

In one example, the scaling parameter for the control information transmission can be the parameter X (e.g. 3), and the scaling parameter for the data information transmission can be the parameter Y (e.g. 2). Thus, the loT device determines the control chip duration by multiplying the reference chip duration of the received signal with the corresponding scaling parameter, thus determining for the control chip duration a value of X times the reference chip duration and determining for the data chip duration a value of Y times the reference chip duration.

**Fig. 27** is an exemplary illustration for an implementation of the Fifth Variant and illustrates schematically two instances of a triggering signal followed by a D2R transmission. In the first instance, the triggering signal is assumed to be transmitted with a chip duration 1 (CD1). In response to the triggering signal, the loT device determines different chip durations for control and data and transmits control information and data information. Assuming the above different scaling parameter values X and Y respectively for control and data, the loT device determines the control chip duration to be X * CD1 and determines the data chip duration to be Y * CD1. The D2R signal is generated and transmitted accordingly by the loT device, using the determined control chip duration (X * CD1) and the determined data chip duration (Y * CD1).

In the second instance, the triggering signal is assumed to be transmitted with a chip duration 2 (CD2). In response to the triggering signal, the loT device determines different chip durations for control and data and transmits control information and data information. Assuming the above different scaling parameter values X and Y respectively for control and data, the loT device determines the control chip duration to be X * CD2 and determines the data chip duration to be Y * CD2. The D2R signal is generated and transmitted accordingly by the loT device, using the determined control chip duration (X * CD2) and the determined data chip duration (Y * CD2).

In summary, the loT device (as an example transmitting device) can easily determine the different chip durations to be used for transmitting the control information transmission and the data information transmission.

Some implementations of the Fifth Variant were so far described based on the exemplary assumption that the reference signal characteristic of the transmission part of the received signal for determining the control and data chip durations is the time duration (e.g. of the On-duration, Off-duration or sequence of On /Off-durations). As another alternative, instead of the time duration, other signal characteristics of the transmission part can be used as well. As presented already for the First Variant, other signal characteristics could be the utilized frequency or amplitude of the transmission parts (see above details with respect to the First Variant).

The Fifth Variant and the implementations thereof are exemplarily described based on using different chip durations, as an example of the different transmission parameters used for the control and data information transmissions. Correspondingly, according the Fifth Variant, the loT device determines the control respectively data chip duration from the reference chip duration of the received signal. However, the Fifth Variant is not limited in said respect and is also applicable to the other transmission parameters, such as the bit transmission rate, coding rate, and repetition number.

In more detail, the loT device is able to determine different transmission parameters for control and data, e.g. one of the bit transmission rate, the coding rate and the repetition number.

For any of these alternatives, the loT device can use configuration information obtained in advance to determine the transmission parameter for control and data from the reference chip duration of the received signal (e.g. triggering signal). Said configuration information may e.g. be hard-coded into the transmitting side device (e.g. at the loT device) or configured during operation, e.g. during a registration phase or later in a configuration message.

For example, when assuming the bit transmission rate as the transmission parameter, different reference chip durations of the received signal are associated with different bit transmission rates. Correspondingly, when the loT device determines a reference chip duration for receiving the signal, the loT device can determine the associated bit transmission rates to be used for generating and transmitting the control information respectively data information.

For example, when assuming the coding rate as the transmission parameter, different reference chip durations of the received signal are associated with different coding rates. Correspondingly, when the loT device determines a reference chip duration for receiving the signal, the loT device can determine the associated coding rates to be used for generating and transmitting the control information respectively data information.

For example, when assuming the transmission repetition as the transmission parameter, different reference chip durations of the received signal are associated with different transmission repetitions. Correspondingly, when the loT device determines a reference chip duration for receiving the signal, the loT device can determine the associated transmission repetitions to be used for generating and transmitting the control information respectively data information.

### Further Variants, including Hardware and Software Implementation of the present disclosure

In the following, variants of the present disclosure will be described.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to a first aspect, an Internet of Things, loT, device is provided comprising the following. A transceiver of the loT device receives a configuration signal. A circuitry of the loT device determines a control transmission parameter and a data transmission parameter based on a signal characteristic of the received configuration signal. The transceiver uses the determined control transmission parameter and the determined data transmission parameter to receive or transmit respectively a control information transmission and a data information transmission.

According to a second aspect provided in addition to the first aspect, the control transmission parameter and the data transmission parameter are determined by the circuitry based on the signal characteristic of separate transmission parts of the configuration signal. In an optional implementation, the separate transmission parts are one or more of On-durations of the configuration signal and Off-durations of the configuration signal.

According to a third aspect provided in addition to the second aspect, the transceiver receives a transmission preamble as the configuration signal, comprising at least two transmission parts. The control transmission parameter is determined by the circuitry based on the signal characteristic of one of the transmission parts of the transmission preamble. The data transmission parameter is determined by the circuitry based on the signal characteristic of another one of the transmission parts of the transmission preamble.

According to a fourth aspect, provided in addition to the second aspect, the transceiver, in operation, receives:
- a transmission preamble as a part of the configuration signal, comprising at least one transmission part, and subsequently
- the control information transmission and the data information transmission, as well as
- an additional transmission part between the control information transmission and the data information transmission as another part of the configuration signal.

The control transmission parameter is determined by the circuitry based on the signal characteristic of the transmission part of the transmission preamble. The data transmission parameter is determined by the circuitry based on the signal characteristic of the additional transmission part between the control information transmission and the data information transmission.

In an optional implementation of the fourth aspect, the circuitry determines whether the data transmission parameter is different from the control transmission parameter based on an indication in the control information transmission. In case the data transmission parameter is not different from the control transmission parameter, the data transmission parameter is determined by the circuitry to be the same as the control transmission parameter, optionally wherein the additional transmission part is not received between the control information transmission and the data information transmission, In case the data transmission parameter is different from the control transmission parameter, the circuitry proceeds to determine the data transmission parameter based on the signal characteristic of the additional transmission part between the control information transmission and the data information transmission.

According to a fifth aspect, provided in addition to the first aspect, the transceiver receives a transmission preamble as the configuration signal, comprising at least two transmission parts, wherein a first of the two transmission parts is within a second of the two transmission parts. The control transmission parameter is determined by the circuitry based on the signal characteristic of one of the first and second transmission parts of the transmission preamble. The data transmission parameter is determined by the circuitry based on the signal characteristic of the other one of the first and second transmission parts of the transmission preamble.

According to a sixth aspect, provided in addition to the first aspect, the transceiver receives a transmission preamble as a part of the configuration signal, comprising at least one transmission part, and subsequently receives the control information transmission as another part of the configuration signal. The control transmission parameter is determined by the circuitry based on the signal characteristic of the at least one transmission part of the transmission preamble. The data transmission parameter is determined by the circuitry based on an indication in the control information transmission.

In an optional implementation of the sixth aspect, the indication in the control information transmission indicates a scaling parameter value. The data transmission parameter is determined by the circuitry by multiplying the indicated scaling parameter value with the previously-determined control transmission parameter.

In a further optional implementation, the indication in the control information transmission indicates a plurality of transmission parameters. In a still further optional implementation, the scaling parameter value is determined by the circuitry based on the indication in the control information transmission alone or based on the indication in the control information transmission together with association information associating a plurality of scaling parameter values with a plurality of values of the indication respectively.

According to a seventh aspect, provided in addition to the first aspect, the control transmission parameter and the data transmission parameter usable for transmission are determined by the circuitry based on an indication in the configuration signal. In an optional implementation, the control transmission parameter and the data transmission parameter usable for transmission are determined from a configuration stored at the loT device. In an optional implementation, the control transmission parameter and the data transmission parameter usable for transmission are determined during a registration procedure of the loT device with the network. In an optional implementation, the control transmission parameter and the data transmission parameter usable for transmission are determined based on a triggering signal that triggers the loT device to perform a transmission. In an optional implementation, the control transmission parameter and the control transmission parameter and the data transmission parameter usable for transmission are determined based one or more of other parameters, including:
- a channel quality of the channel between the loT device and an opposite reader side,
- an amount of control information to be transmitted,
- an amount of data information to be transmitted.

According to an eighth aspect, provided in addition to the first aspect, the control transmission parameter and the data transmission parameter usable for transmission are determined by the circuitry based on a transmission parameter usable for reception of a signal and on different scaling parameter values related to the control information transmission and the data information transmission. In an optional implementation, the circuitry determines the transmission parameter usable for reception of the signal based on the signal, such as based on a signal characteristic of a transmission part of the signal, or based on an indication in the signal.

Optionally, the different scaling parameter values are configured to the loT device in advance. Further optionally, the signal is one of a triggering signal for triggering the loT device to transmit information and of a system information signal.

According to a ninth aspect, provided in addition to any one of the first to eighth aspects, the control transmission parameter and data transmission parameter is one of:
- a chip duration,
- a transmission rate,
- a coding rate, and
- a number of repetitions.

According to a tenth aspect, provided in addition to any one of the first to ninth aspects, the signal characteristic of the configuration signal is one of:
- a time duration of the transmission part,
- a frequency used for transmitting the transmission part, and
- an amplitude of the transmission part.

According to an eleventh aspect, a node is provided comprising the following. A circuitry of the node determines a signal characteristic of a configuration signal to indicate a control transmission parameter and a data transmission parameter. The circuitry generates a configuration signal, having the determined signal characteristic. A transceiver of the node transmits the configuration signal to an Internet of Things, loT device, and further transmits or receives a control information transmission and a data information transmission respectively based on the control transmission parameter and the data transmission parameter.

According to a twelfth aspect, provided in additional to the eleventh aspect, the configuration signal, generated by the circuitry, is a transmission preamble comprising separate transmission parts having the determined signal characteristic. Optionally, the separate transmission parts are one or more of On-durations of the configuration signal and Off-durations of the configuration signal.

According to a thirteenth aspect, provided in addition to the twelfth aspect, the transceiver transmits a transmission preamble as the configuration signal, comprising at least two transmission parts. The signal characteristic of one of the transmission parts of the transmission preamble is determined by the circuitry to indicate the control transmission parameter. The signal characteristic of another one of the transmission parts of the transmission preamble is determined to indicate the data transmission parameter.

According to a fourteenth aspect, provided in addition to the twelfth aspect, the transceiver transmits
- a transmission preamble as a part of the configuration signal, comprising at least one transmission part, and subsequently
- the control information transmission and the data information transmission, as well as
- an additional transmission part between the control information transmission and the data information transmission as another part of the configuration signal.

Further, the signal characteristic of the transmission part of the transmission preamble is determined by the circuitry to indicate a control transmission parameter. The signal characteristic of the additional transmission part between the control information transmission and the data information transmission is determined by the circuitry to indicate the data transmission parameter.

In an optional implementation, the circuitry determines whether the data transmission parameter is different from the control transmission parameter. In case the data transmission parameter is not different from the control transmission parameter, the transceiver does not transmit the additional transmission part between the control information transmission and the data information transmission. In case the data transmission parameter is different from the control transmission parameter, the transceiver transmits the additional transmission part with the signal characteristic.

According to a fifteenth aspect, provided in addition to the eleventh aspect, the configuration signal, generated by the circuitry, is a transmission preamble comprising at least two transmission parts, wherein a first one of the two transmission parts is within a second of the two transmission parts. One of the first and second transmission parts of the transmission preamble has the signal characteristic to indicate the control transmission parameter. Another one of the first and second transmission parts of the transmission preamble has the signal characteristic to indicate the data transmission parameter.

According to a sixteenth aspect, provided in addition to the eleventh aspect, the transceiver transmits a transmission preamble as a part of the configuration signal, comprising at least one transmission part, and subsequently transmits the control information transmission as another part of the configuration signal. The signal characteristic of the transmission part of the transmission preamble is determined by the circuitry to indicate a control transmission parameter. The control information transmission includes an indication to indicate the data transmission parameter. Optionally, the circuitry determines the indication so as to indicate a scaling parameter value, wherein the data transmission parameter is the indicated scaling parameter value multiplied with the control transmission parameter indicated by the signal characteristic of the transmission part of the transmission preamble. Optionally, the circuitry determines the indication so as to indicate a plurality of transmission parameters.

According to a seventeenth aspect, provided in addition to the eleventh aspect, the transceiver transmits a configuration signal to the loT device with an indication of a control transmission parameter and a data transmission parameter to be used by the loT device for transmitting control information and data information. Optionally, the transceiver transmits a triggering signal to the loT device to trigger the loT device to perform a transmission. The triggering signal further comprises information to indicate the control transmission parameter and the data transmission parameter

According to an eighteenth aspect, provided in addition to the eleventh aspect, the transceiver transmits a signal to the loT device using a transmission parameter, and transmits a configuration information to the loT device indicating different scaling parameter values to be used by the loT device for determining the control and data transmission parameters for respectively transmitting by the loT device control information and data information.

According to a nineteenth aspect, a method is provided comprising the following steps performed by an Internet of Things, loT, device:
receiving a configuration signal; and
determining a control transmission parameter and a data transmission parameter based on a signal characteristic of the received configuration signal,
using the determined control transmission parameter and the determined data transmission parameter to receive or transmit respectively a control information transmission and a data information transmission.

According to a 20^{th} aspect, a method is provided comprising the following steps performed by a node:
determining a signal characteristic of a configuration signal to indicate a control transmission parameter and a data transmission parameter,
generating a configuration signal, having the determined signal characteristic,
transmitting the configuration signal to an Internet of Things, loT device, and further transmitting or receiving a control information transmission and a data information transmission respectively based on the control transmission parameter and the data transmission parameter.

According to a 21^{st} aspect, an integrated circuit is provided, which controls a process an Internet of Things, loT, device, the process comprising the following steps performed by the loT device:
receiving a configuration signal; and
determining a control transmission parameter and a data transmission parameter based on a signal characteristic of the received configuration signal,
using the determined control transmission parameter and the determined data transmission parameter to receive or transmit respectively a control information transmission and a data information transmission.

According to a 22^{nd} aspect, an integrated circuit is provided, which controls a process of a node, the process comprising the following steps performed by the node:
determining a signal characteristic of a configuration signal to indicate a control transmission parameter and a data transmission parameter,
generating a configuration signal, having the determined signal characteristic,
transmitting the configuration signal to an Internet of Things, loT device, and further transmitting or receiving a control information transmission and a data information transmission respectively based on the control transmission parameter and the data transmission parameter.

## Claims

1. An Internet of Things, loT, device comprising:
a transceiver, which in operation, receives a configuration signal; and
circuitry, which in operation, determines a control transmission parameter and a data transmission parameter based on a signal characteristic of the received configuration signal,
the transceiver, which in operation, uses the determined control transmission parameter and
the determined data transmission parameter to receive or transmit respectively a control information transmission and a data information transmission.

2. The loT device according to claim 1, wherein the control transmission parameter and the data transmission parameter are determined by the circuitry based on the signal characteristic of separate transmission parts of the configuration signal,
optionally wherein the separate transmission parts are one or more of On-durations of the configuration signal and Off-durations of the configuration signal.

3. The loT device according to claim 2, wherein the transceiver, in operation, receives a transmission preamble as the configuration signal, comprising at least two transmission parts, and
the control transmission parameter is determined by the circuitry based on the signal characteristic of one of the transmission parts of the transmission preamble, and the data transmission parameter is determined by the circuitry based on the signal characteristic of another one of the transmission parts of the transmission preamble.

4. The loT device according to claim 2, wherein the transceiver, in operation, receives:
- a transmission preamble as a part of the configuration signal, comprising at least one transmission part, and subsequently
- the control information transmission and the data information transmission, as well as
- an additional transmission part between the control information transmission and the data information transmission as another part of the configuration signal,
wherein the control transmission parameter is determined by the circuitry based on the signal characteristic of the transmission part of the transmission preamble, and
the data transmission parameter is determined by the circuitry based on the signal characteristic of the additional transmission part between the control information transmission and the data information transmission,
optionally wherein the circuitry, in operation, determines whether the data transmission parameter is different from the control transmission parameter based on an indication in the control information transmission, and
in case the data transmission parameter is not different from the control transmission parameter, the data transmission parameter is determined by the circuitry to be the same as the control transmission parameter, optionally wherein the additional transmission part is not received between the control information transmission and the data information transmission,
in case the data transmission parameter is different from the control transmission parameter, the circuitry proceeds to determine the data transmission parameter based on the signal characteristic of the additional transmission part between the control information transmission and the data information transmission.

5. The loT device according to claim 1, wherein the transceiver, in operation, receives a transmission preamble as the configuration signal, comprising at least two transmission parts, wherein a first of the two transmission parts is within a second of the two transmission parts, and
the control transmission parameter is determined by the circuitry based on the signal characteristic of one of the first and second transmission parts of the transmission preamble, and the data transmission parameter is determined by the circuitry based on the signal characteristic of the other one of the first and second transmission parts of the transmission preamble.

6. The loT device according to claim 1, wherein the transceiver, in operation, receives a transmission preamble as a part of the configuration signal, comprising at least one transmission part, and subsequently receives the control information transmission as another part of the configuration signal,
wherein the control transmission parameter is determined by the circuitry based on the signal characteristic of the at least one transmission part of the transmission preamble,
wherein the data transmission parameter is determined by the circuitry based on an indication in the control information transmission,
optionally wherein the indication in the control information transmission indicates a scaling parameter value, and the data transmission parameter is determined by the circuitry by multiplying the indicated scaling parameter value with the previously-determined control transmission parameter,
optionally wherein the indication in the control information transmission indicates a plurality of transmission parameters,
optionally wherein the scaling parameter value is determined by the circuitry based on the indication in the control information transmission alone or based on the indication in the control information transmission together with association information associating a plurality of scaling parameter values with a plurality of values of the indication respectively.

7. The loT device according to claim 1, wherein the control transmission parameter and the data transmission parameter usable for transmission are determined by the circuitry based on an indication in the configuration signal,
optionally wherein the control transmission parameter and the data transmission parameter usable for transmission are determined from a configuration stored at the loT device,
optionally wherein the control transmission parameter and the data transmission parameter usable for transmission are determined during a registration procedure of the loT device with the network,
optionally wherein the control transmission parameter and the data transmission parameter usable for transmission are determined based on a triggering signal that triggers the loT device to perform a transmission,
optionally wherein the control transmission parameter and the control transmission parameter and the data transmission parameter usable for transmission are determined based one or more of other parameters, including:
- a channel quality of the channel between the loT device and an opposite reader side,
- an amount of control information to be transmitted,
- an amount of data information to be transmitted.

8. The loT device according to claim 1, wherein the control transmission parameter and the data transmission parameter usable for transmission are determined by the circuitry based on a transmission parameter usable for reception of a signal and on different scaling parameter values related to the control information transmission and the data information transmission,
optionally wherein the circuitry, in operation, determines the transmission parameter usable for reception of the signal based on the signal, such as based on a signal characteristic of a transmission part of the signal, or based on an indication in the signal, and
optionally wherein the different scaling parameter values are configured to the loT device in advance,
optionally wherein the signal is one of a triggering signal for triggering the loT device to transmit information and of a system information signal.

9. The loT device according to any one of claims 1 to 8, wherein the control transmission parameter and data transmission parameter is one of:
- a chip duration,
- a transmission rate,
- a coding rate, and
- a number of repetitions.

10. The loT device according to any one of claims 1 to 9, wherein the signal characteristic of the configuration signal is one of:
- a time duration of the transmission part,
- a frequency used for transmitting the transmission part, and
- an amplitude of the transmission part.

11. A node comprising:
circuitry, which in operation, determines a signal characteristic of a configuration signal to indicate a control transmission parameter and a data transmission parameter,
the circuitry, which in operation, generates a configuration signal, having the determined signal characteristic,
a transceiver, which in operation, transmits the configuration signal to an Internet of Things, loT device, and further transmits or receives a control information transmission and a data information transmission respectively based on the control transmission parameter and the data transmission parameter.

12. The node according to claim 11, wherein the configuration signal, generated by the circuitry, is a transmission preamble comprising separate transmission parts having the determined signal characteristic,
optionally wherein the separate transmission parts are one or more of On-durations of the configuration signal and Off-durations of the configuration signal.

13. The node according to claim 12, wherein the transceiver, in operation, transmits a transmission preamble as the configuration signal, comprising at least two transmission parts, and
wherein the signal characteristic of one of the transmission parts of the transmission preamble is determined by the circuitry to indicate the control transmission parameter, and the signal characteristic of another one of the transmission parts of the transmission preamble is determined to indicate the data transmission parameter.

14. The node according to claim 12, wherein the transceiver, in operation, transmits
- a transmission preamble as a part of the configuration signal, comprising at least one transmission part, and subsequently
- the control information transmission and the data information transmission, as well as
- an additional transmission part between the control information transmission and the data information transmission as another part of the configuration signal,
wherein the signal characteristic of the transmission part of the transmission preamble is determined by the circuitry to indicate a control transmission parameter, and
wherein the signal characteristic of the additional transmission part between the control information transmission and the data information transmission is determined by the circuitry to indicate the data transmission parameter,
optionally wherein the circuitry, in operation, determines whether the data transmission parameter is different from the control transmission parameter, and
in case the data transmission parameter is not different from the control transmission parameter, the transceiver does not transmit the additional transmission part between the control information transmission and the data information transmission,
in case the data transmission parameter is different from the control transmission parameter, the transceiver transmits the additional transmission part with the signal characteristic.

15. The node according to claim 11, wherein the configuration signal, generated by the circuitry, is a transmission preamble comprising at least two transmission parts, wherein a first one of the two transmission parts is within a second of the two transmission parts, and
wherein one of the first and second transmission parts of the transmission preamble has the signal characteristic to indicate the control transmission parameter, and wherein another one of the first and second transmission parts of the transmission preamble has the signal characteristic to indicate the data transmission parameter.
